# EUROPEAN PATENT APPLICATION

(11) **EP 4 395 278 A1**
(43) Date of publication of application: **03.07.2024**
(21) Application number: 22860904.6
(22) Date of filing: 16.05.2022
(51) Int. Cl.: H04L 67/10, H04L 43/08, H04L 67/06

(54) **CONTROL METHOD FOR INFORMATION DISTRIBUTION PROCESS, COMPUTER SYSTEM, AND COMPUTER**

(30) Priority: 26.08.2021 JP 2021137894
(71) Applicant: Hitachi, Ltd., Tokyo 100-8280 (JP)
(72) Inventor: KATAYAMA Rintaro, Tokyo 100-8280 (JP); ISHII Daisuke, Tokyo 100-8280 (JP); ITO Daisuke, Tokyo 100-8280 (JP); FUJIWARA Ryosuke, Tokyo 100-8280 (JP)
(74) Representative: MERH-IP Matias Erny Reichl Hoffmann Patentanwälte PartG mbB
(86) International application number: PCT/JP2022/020389
(87) International publication number: WO 2023/026607

(57) **Abstract**

A computer system is connected with a plurality of edge devices, monitors the state of each of the plurality of edge devices after an information distribution process for the plurality of edge devices is started, executes a process of identifying an edge device for which the information distribution process has failed and a cause of failure, in reference to a state monitoring result of each of the plurality of edge devices, and presents the content of operation related to termination of the information distribution process, in reference to a result of the process.

## Description

### Incorporation by Reference

The present application claims the priority of Japanese Patent Application No. 2021-137894 filed on August 26, 2021, the content of which is incorporated herein by reference.

### Technical Field

The present invention relates to a method, a system, and an apparatus that control distribution of information to edge devices.

### Background Art

In recent years, along with the progress of digital transformation for edge devices such as factory devices, railway vehicles, or automobiles, information related to software, information content, application, functions, and the like is distributed/deployed to edge devices via a network. In the following explanation, distribution/deployment of information to edge devices via a network is described as information distribution.

As a technology to handle failures of information distribution, a technology described in Patent Document 1 is known. Patent Document 1 discloses a firmware updating system that "executes a firmware updating process for a plurality of groups that are formed by grouping a plurality of IoT devices, at mutually different timings, and, in a case where there is a group for which the firmware updating process has failed, limits execution of the firmware updating process for the remaining groups for which firmware has not been updated."

### Prior Art Document

### Patent Document

Patent Document 1: JP-2020-154634-A

### Summary of the Invention

### Problem to be Solved by the Invention

Performing a series of processing of information distribution, that is, a distribution sequence, collectively for a plurality of edge devices makes it possible to perform information distribution to a large number of edge devices with reduced workloads of a worker. For example, a worker can perform operation to start a sequence of distribution to a plurality of edge devices at once. In addition, for example, in a case where approvals of a worker are necessary for installation of software on edge devices or the like, the worker can perform operation for approval regarding a plurality of edge devices at once.

However, the scheme described above does not make it possible to give approval and causes a failure in a distribution sequence in a case where a notification that an edge device is ready for installation of software is not received from the edge device. In addition, a failure in the distribution sequence also occurs in a case where a notification that installation of software has been completed is not received from an edge device. There can be various causes of failure in a distribution sequence. For example, a failure in the distribution sequence can occur due to congestion of a communication band, disconnection of communication, a failure of command execution caused by an increase of the load of an edge device, a failure of installation caused by a malfunction of software, or the like.

Information concerning causes of failure in a distribution sequence is beneficial to a worker, and the worker can decide to continue or terminate a distribution sequence depending on causes of failure. Causes of failure are not identified in Patent Document 1.

An object of the present invention is to provide a method and a system that identify causes of failure in a distribution sequence and provide information useful for decisions to continue or terminate the distribution sequence to a worker.

### Means for Solving the Problem

A representative example of the invention disclosed in the present application is as follows. That is, there is provided a control method of an information distribution process for a plurality of edge devices executed by a computer system connected with the edge devices, the computer system including a computer having a processor, a storage device connected to the processor, and a network interface connected to the processor, the control method of the information distribution process including a first step performed by the processor to monitor a state of each of the plurality of edge devices after the information distribution process for the plurality of edge devices is started, a second step performed by the processor to execute a first process of identifying the edge device for which the information distribution process has failed and a cause of failure, in reference to a state monitoring result of each of the plurality of edge devices, and a third step performed by the processor to present content of operation related to termination of the information distribution process, in reference to a result of the first process.

### Advantages of the Invention

The present invention can identify causes of failure in a distribution sequence and provide information useful for decisions to continue or terminate the distribution sequence to a worker. Problems, configurations, and effects other than those described above will be made clear by the following explanation of embodiments.

### Brief Description of the Drawings

FIG. 1 is a figure depicting a configuration example of a system according to a first embodiment.
FIG. 2 is a figure depicting a configuration example of a distribution control apparatus according to the first embodiment.
FIG. 3 is a figure depicting a configuration example of edge devices according to the first embodiment.
FIG. 4 is a figure depicting an example of a data structure of metric correct value management information according to the first embodiment.
FIG. 5 is a figure depicting an example of the data structure of edge device management information according to the first embodiment.
FIG. 6A is a sequence diagram for explaining a processing procedure in the system according to the first embodiment.
FIG. 6B is a sequence diagram for explaining the processing procedure in the system according to the first embodiment.
FIG. 7 is a flowchart for explaining an example of a termination assessment process executed by the distribution control apparatus according to the first embodiment.
FIG. 8 is a flowchart for explaining an example of the termination assessment process executed by the distribution control apparatus according to the first embodiment.
FIG. 9 is a flowchart for explaining an example of the termination assessment process executed by the distribution control apparatus according to the first embodiment.
FIG. 10A is a figure depicting an example of a screen displayed on a worker terminal according to the first embodiment.
FIG. 10B is a figure depicting an example of a screen displayed on the worker terminal according to the first embodiment.
FIG. 11 is a flowchart for explaining an example of a metric checking process executed by the distribution control apparatus according to the first embodiment.
FIG. 12 is a sequence diagram for explaining a processing procedure in the system according to a second embodiment.
FIG. 13 is a flowchart for explaining an example of the termination assessment process executed by the distribution control apparatus according to the second embodiment.
FIG. 14 is a flowchart for explaining an example of the termination assessment process executed by the distribution control apparatus according to the second embodiment.
FIG. 15 is a flowchart for explaining an example of the termination assessment process executed by the distribution control apparatus according to the second embodiment.
FIG. 16 is a figure depicting an example of a screen displayed on the worker terminal according to the second embodiment.
FIG. 17 is a sequence diagram for explaining a processing procedure in the system according to a third embodiment.
FIG. 18A is a flowchart for explaining an example of the metric checking process executed by the distribution control apparatus according to the third embodiment.
FIG. 18B is a flowchart for explaining the example of the metric checking process executed by the distribution control apparatus according to the third embodiment.
FIG. 19 is a flowchart for explaining an example of the termination assessment process executed by the distribution control apparatus according to the third embodiment.
FIG. 20 is a flowchart for explaining an example of the termination assessment process executed by the distribution control apparatus according to the third embodiment.
FIG. 21A is a sequence diagram for explaining a processing procedure in the system according to a fourth embodiment.
FIG. 21B is a sequence diagram for explaining a processing procedure in the system according to the fourth embodiment.
FIG. 22 is a flowchart for explaining an example of the termination assessment process executed by the distribution control apparatus according to the fourth embodiment.
FIG. 23A is a sequence diagram for explaining a processing procedure in the system according to a modification example.
FIG. 23B is a sequence diagram for explaining the processing procedure in the system according to the modification example.

### Modes for Carrying Out the Invention

Hereinbelow, embodiments of the present invention are explained with use of the figures. Note that the present invention is not to be interpreted as being limited to the described content of the embodiments illustrated below. Those skilled in the art can easily understand that the specific configuration of the present invention can be changed within the scope not departing from the idea or gist of the present invention.

In the configuration of the invention explained below, identical or similar constituent elements or functions are given identical reference characters, and overlapping explanations are omitted.

The use of such words as "first," "second," or "third" in the present specification and the like is for the purpose of identifying constituent elements, and does not necessarily limit numbers or orders thereof.

The position, size, shape, range, and the like of each constituent element depicted in a figure or the like do not represent its actual position, size, shape, range, and the like in order to facilitate understanding of the invention, in some cases. Accordingly, the present invention is not necessarily limited by positions, sizes, shapes, ranges, and the like disclosed in figures and the like.

### [First embodiment]

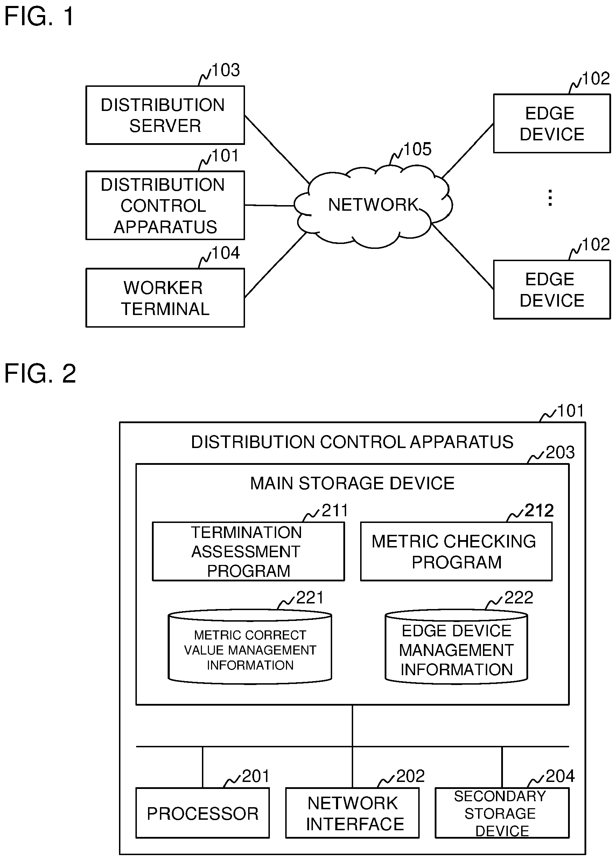

FIG. 1 is a figure depicting a configuration example of a system according to a first embodiment.

The system includes a distribution control apparatus 101, edge devices 102, a distribution server 103, and a worker terminal 104. The distribution control apparatus 101, the edge devices 102, the distribution server 103, and the worker terminal 104 are connected via a network 105. The network 105 is a WAN (Wide Area Network) and a LAN (Local Area Network), and its connection scheme may be one in which connection is established in a wired manner or one in which connection is established in a wireless manner.

The edge devices 102 are devices to which information is distributed, and, for example, are factory devices, railway vehicles, automobiles, or the like. The distribution control apparatus 101 is a computer that controls information distribution. The distribution server 103 is a computer that manages software, information content, and the like to be distributed to the edge devices 102 in information distribution. The worker terminal 104 is a terminal operated by a worker who performs information distribution. The worker operates the distribution control apparatus 101 by using the worker terminal 104.

Note that functions of the distribution server 103 and the distribution control apparatus 101 may be realized with use of a computer system including a plurality of computers. In addition, the functions of each of the distribution server 103 and the distribution control apparatus 101 may be integrated into a computer.

FIG. 2 is a figure depicting a configuration example of the distribution control apparatus 101 according to the first embodiment.

The distribution control apparatus 101 has a processor 201, a network interface 202, a main storage device 203, and a secondary storage device 204. The respective hardware elements are connected with each other via an internal bus.

Functions of the distribution control apparatus 101 are realized by the processor 201 executing programs stored on the main storage device 203. In a case where the distribution control apparatus 101 is the subject of a sentence explaining a process in the following explanation, this represents that the processor 201 is executing a program.

The network interface 202 communicates with an external apparatus via the network.

The main storage device 203 is a storage device such as a memory, and stores programs to be executed by the processor 201 and information to be used in the programs. In addition, the main storage device 203 is used also as a work area.

The secondary storage device 204 is a storage device such as an HDD (Hard Disk Drive) or an SSD (Solid State Drive), and stores data permanently. The programs and the information stored on the main storage device 203 may be stored on the secondary storage device 204. In this case, the processor 201 reads out the programs and the information from the secondary storage device 204, and loads them onto the main storage device 203.

The main storage device 203 stores a termination assessment program 211, a metric checking program 212, metric correct value management information 221, and edge device management information 222. The data structures of the metric correct value management information 221 and the edge device management information 222 and processes realized by the programs are described later.

Since the hardware configuration of the distribution server 103 and the worker terminal 104 is identical to that of the distribution control apparatus 101, explanations thereof are omitted.

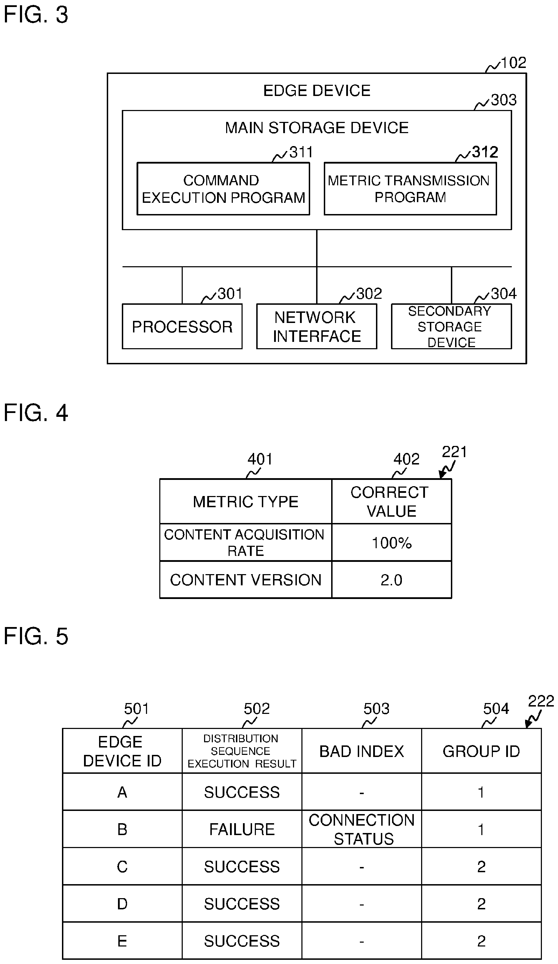

FIG. 3 is a figure depicting a configuration example of the edge devices 102 according to the first embodiment.

Each edge device 102 has a processor 301, a network interface 302, a main storage device 303, and a secondary storage device 304. The respective hardware elements are connected with each other via an internal bus. Note that the edge device 102 may include an unillustrated hardware element such as a driving device.

The processor 301, the network interface 302, the main storage device 303, and the secondary storage device 304 are hardware identical to the processor 201, the network interface 202, the main storage device 203, and the secondary storage device 204.

Functions of the edge device 102 are realized by the processor 301 executing programs stored on the main storage device 303. In a case where the edge device 102 is the subject of a sentence explaining a process in the following explanation, this represents that the processor 301 is executing a program.

The main storage device 303 stores a command execution program 311 and a metric transmission program 312.

FIG. 4 is a figure depicting an example of the data structure of the metric correct value management information 221 according to the first embodiment.

The metric correct value management information 221 is table-format information, and stores entries including metric types 401 and correct values 402. One entry corresponds to one metric type. Note that fields included in an entry are not limited to those mentioned before.

The metric types 401 are fields storing the types of metric representing the state of progress of information distribution. The metric correct value management information 221 depicted in FIG. 4 stores entries of two metric types which are the acquisition rate of information content and the version of the information content.

The correct values 402 are fields storing the correct values of the metrics corresponding to the metric types. The correct value 402 of the entry corresponding to the acquisition rate of the information content stores 100%, and the correct value 402 of the entry corresponding to the version of the information content stores 2.0.

FIG. 5 is a figure depicting an example of the data structure of the edge device management information 222 according to the first embodiment.

The edge device management information 222 is table-format information, and stores entries including edge device IDs 501, distribution sequence execution results 502, bad indices 503, and group IDs 504. One entry corresponds to one edge device 102. Note that fields included in an entry are not limited to those mentioned before.

The edge device IDs 501 are fields storing identification information of each edge device 102.

The distribution sequence execution results 502 are fields storing execution results of a distribution sequence for the edge devices 102. The distribution sequence execution results 502 store either "success" representing that the distribution sequence has been successful or "failure" representing that the distribution sequence has failed.

The bad indices 503 are fields storing information concerning indices used for assessment. For example, in a case of an index related to communication, a bad index 503 stores "connection status," and in a case of an index related to load, a bad index 503 stores "load."

The group IDs 504 are fields storing identification information of each group which is an execution unit of a distribution sequence. In a case where a worker has set groups in advance, the group IDs 504 store identification information of each group.

Note that instead of identification information of each group, the group IDs 504 may store the versions of firmware, the types of edge device, or the like. In this case, groups each including, as elements, edge devices 102 with the same firmware or of the same type are formed.

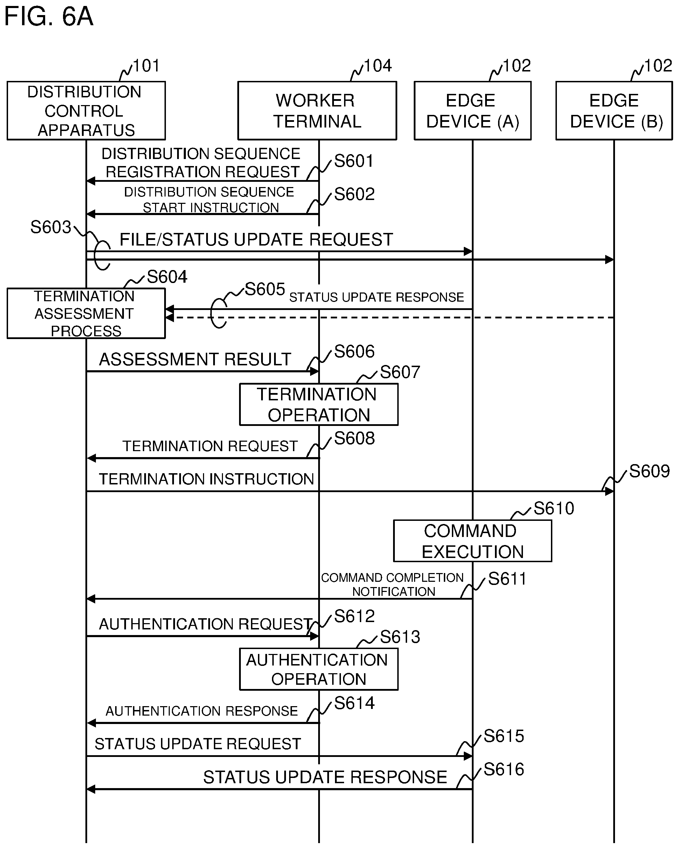

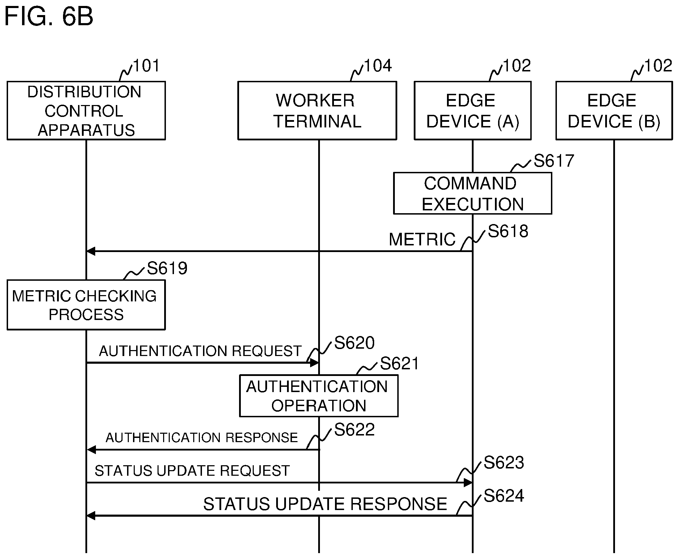

FIG. 6A and FIG. 6B are sequence diagrams for explaining a processing procedure in the system according to the first embodiment.

A worker transmits a distribution sequence registration request to the distribution control apparatus 101 by using the worker terminal 104 (Step S601). For example, by transmitting the distribution sequence registration request, the worker sets a phase group forming a distribution sequence, a phase that requires approval of the worker, metrics to be transmitted by edge devices 102, a command to be executed by the edge devices 102 at each phase, the correct values of the metrics, and required materials such as software to be installed, information content, or an application container.

The worker transmits a distribution sequence start instruction to the distribution control apparatus 101 by using the worker terminal 104 (Step S602).

In a case where the distribution control apparatus 101 has received the distribution sequence start instruction, the distribution control apparatus 101 starts the distribution sequence. Processes from Step S603 to Step S624 are the distribution sequence. First, the distribution control apparatus 101 distributes a file and also transmits a status update request to the edge devices 102 (Step S603). In addition, the distribution control apparatus 101 starts a termination assessment process (Step S604). The edge devices 102 are notified of the phase group forming the distribution sequence, the metrics to be transmitted, the command to be executed by the edge devices 102 at each phase, the required materials, and the like via the file.

The edge devices 102 transmit status update responses to the distribution control apparatus 101 in response to the file distribution and the status update request (Step S605).

It is assumed in the present embodiment that the distribution control apparatus 101 could receive a status update response from an edge device (A) 102, but could not receive a status update response from the edge device (B) 102. A possible cause of the failure to receive a status update response is the loss of the file/status update request, the loss of a status update response, or the like.

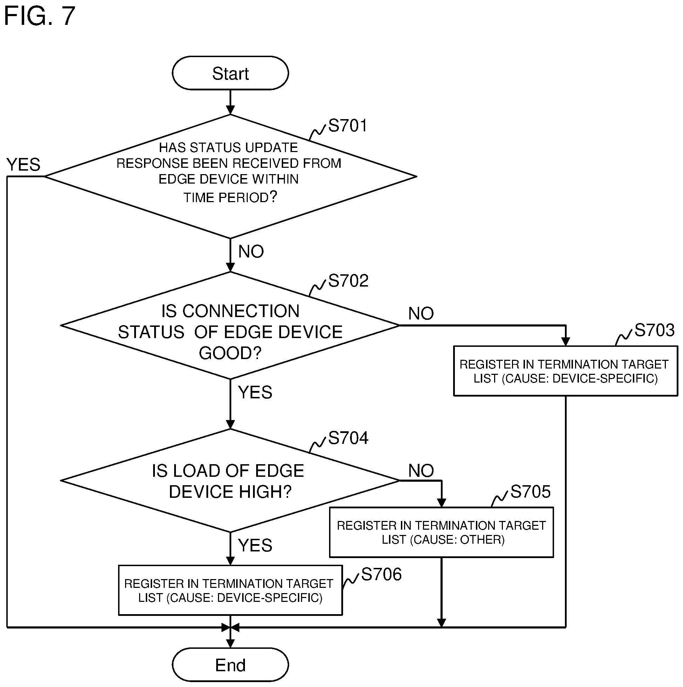

In the termination assessment process, the distribution control apparatus 101 assesses whether or not the distribution sequence has succeeded and also identifies the cause of failure, according to the status update response reception status. Here, details of the termination assessment process are explained. FIG. 7, FIG. 8, and FIG. 9 are flowcharts for explaining examples of the termination assessment process executed by the distribution control apparatus 101 according to the first embodiment. The termination assessment process is performed by the processor 201 that executes the termination assessment program 211.

First, the termination assessment process depicted in FIG. 7 is explained. The termination assessment process depicted in FIG. 7 is executed for each edge device 102. In the termination assessment process depicted in FIG. 7, it is assessed whether or not the distribution sequence has succeeded according to whether or not there is a status update response from an edge device 102, and the cause of failure is identified in reference to evaluation indices (connection status index and load index) acquired from the edge device 102.

The distribution control apparatus 101 assesses whether or not a status update response has been received from the edge device 102 within a predetermined time period (Step S701).

In a case where a status update response has been received from the edge device 102 within the predetermined time period (YES in Step S701), the distribution control apparatus 101 ends the termination assessment process. At this time, the distribution control apparatus 101 updates an entry in the edge device management information 222 corresponding to the edge device 102. Specifically, the distribution control apparatus 101 sets "success" in the distribution sequence execution result 502.

In a case where a status update response has not been received from the edge device 102 within the predetermined time period (NO in Step S701), the distribution control apparatus 101 assesses that the distribution sequence has failed and identifies the cause of failure. First, the distribution control apparatus 101 assesses whether or not the connection status of the edge device 102 is good (Step S702). Specifically, such processes as the ones below are executed.

(S702-1) The distribution control apparatus 101 calculates an index for evaluating the connection status (connection status index) of the edge device 102.

For example, in a case where the edge device 102 is periodically transmitting Keep Alive messages to the distribution control apparatus 101, the distribution control apparatus 101 calculates, as a connection status index, an indication as to whether or not the messages are received. For example, in a case where the edge device 102 is measuring an index representing the communication quality, the edge device 102 calculates the latest index, the average of the index, or the like as a connection status index.

(S702-2) The distribution control apparatus 101 assesses the connection status of the edge device 102 in reference to the connection status index.

For example, in a case where the latest Keep Alive message is received, the distribution control apparatus 101 assesses that the connection status of the edge device 102 is good. For example, in a case where the latest communication quality index is greater than a threshold, the distribution control apparatus 101 assesses that the connection status of the edge device 102 is good.

The processes in Step S702 have been explained thus far.

In a case where the connection status of the edge device 102 is not good (NO in Step S702), the distribution control apparatus 101 registers, in a termination target list, data including the cause "device-specific" and identification information of the edge device 102 in association with each other (Step S703). Thereafter, the distribution control apparatus 101 ends the termination assessment process.

At this time, the distribution control apparatus 101 updates an entry in the edge device management information 222 corresponding to the edge device 102. Specifically, the distribution control apparatus 101 sets "failure" in the distribution sequence execution result 502 and sets "connection status" in the bad index 503.

In a case where the connection status of the edge device 102 is good (YES in Step S702), the distribution control apparatus 101 assesses whether or not the load of the edge device 102 is high (Step S704).

Specifically, the distribution control apparatus 101 calculates an index for evaluating the load (load index) of the edge device 102, and assesses whether or not the load of the edge device 102 is high in reference to the load index. For example, the distribution control apparatus 101 periodically acquires the usage rate of the processor 301 from the edge device 102, and calculates the latest usage rate, the average of the usage rate, or the like as the load index. In a case where the usage rate of the processor 301 is higher than a threshold, the distribution control apparatus 101 assesses that the load of the edge device 102 is high.

In a case where the load of the edge device 102 is not high (NO in Step S704), the distribution control apparatus 101 registers, in the termination target list, data including the cause "other" and identification information of the edge device 102 in association with each other (Step S705). Thereafter, the distribution control apparatus 101 ends the termination assessment process.

At this time, the distribution control apparatus 101 updates an entry in the edge device management information 222 corresponding to the edge device 102. Specifically, the distribution control apparatus 101 sets "failure" in the distribution sequence execution result 502 and sets "other" in the bad index 503.

In a case where the load of the edge device 102 is high (YES in Step S704), the distribution control apparatus 101 registers, in the termination target list, data including the cause "device-specific" and identification information of the edge device 102 in association with each other (Step S706). Thereafter, the distribution control apparatus 101 ends the termination assessment process.

At this time, the distribution control apparatus 101 updates an entry in the edge device management information 222 corresponding to the edge device 102. Specifically, the distribution control apparatus 101 sets "failure" in the distribution sequence execution result 502 and sets "load" in the bad index 503.

In a case where the connection status of the edge device 102 for which the distribution sequence has failed is bad or in a case where the load of the edge device 102 is high, an indication that the distribution sequence has failed due to a cause unique to the edge device 102 is recorded in the termination target list. In addition, in a case where the connection status is good and the load is low, an indication that the distribution sequence has failed due to a cause other than causes unique to the edge device 102 is registered in the termination target list.

After the termination assessment process for all the edge devices 102 is ended, the distribution control apparatus 101 decides recommended operation to be presented to the worker, in reference to the termination target list. For example, possible recommended operation is ones described below.

(1) In a case where there is an edge device 102 for which the distribution sequence has failed due to a cause unique to the edge device 102, the distribution control apparatus 101 proposes the worker to terminate the distribution sequence for the edge device 102. In this case, the distribution sequence for other edge devices 102 is continued.
(2) In a case where there is an edge device 102 for which the distribution sequence has failed due to a cause other than causes unique to the edge device 102, the distribution sequence for other edge devices 102 may also fail. In view of this, the distribution control apparatus 101 proposes the worker to terminate the distribution sequence for the group or the whole.
(3) In a case where there are various causes of failure in the distribution sequence for edge devices 102, the distribution control apparatus 101 decides recommended operation in reference to the ratio of edge devices 102 belonging to each cause. For example, in a case where the ratio of edge devices 102 belonging to the cause "other" is high, the distribution control apparatus 101 proposes the worker to terminate the distribution sequence for the group or the whole.

In this manner, efficient control of the distribution sequence can be realized by proposing recommended operation along with causes of failure in the distribution sequence. This allows reduction of workloads and working time of the worker required for control of the distribution sequence.

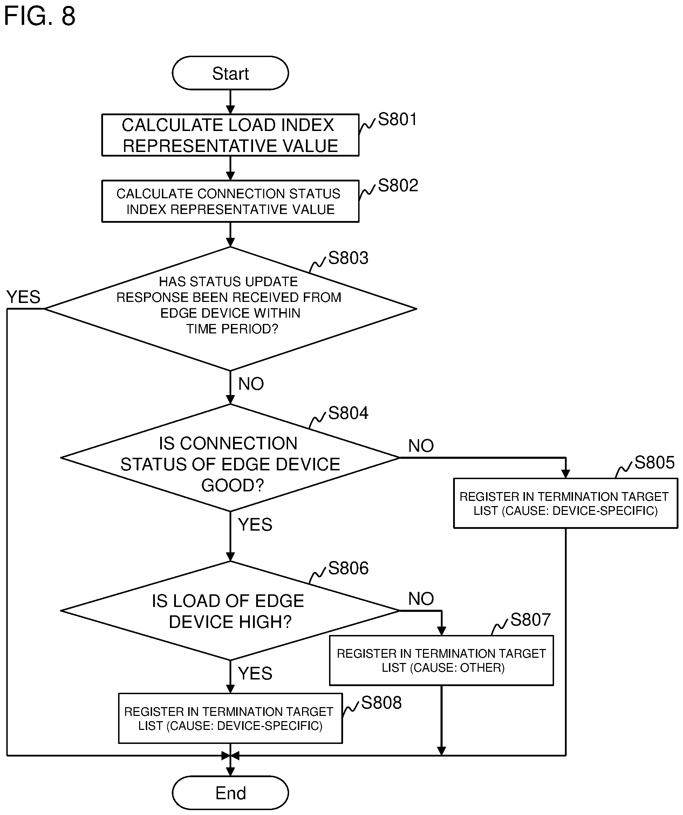

Next, the termination assessment process depicted in FIG. 8 is explained. The termination assessment process depicted in FIG. 8 is executed for each edge device 102. In the termination assessment process depicted in FIG. 8, it is assessed whether or not the distribution sequence has succeeded, according to whether or not there is a status update response from an edge device 102, and the cause of failure is identified in reference to an evaluation index acquired from a plurality of edge devices 102.

The distribution control apparatus 101 calculates a load index representative value by using a load index such as the usage rate of the processors 301 acquired from the edge devices 102 (Step S801).

The load index representative value is the average, median, or x-percentile value (x-percentile) (e.g., x is 90) or the like of the load index.

The distribution control apparatus 101 calculates a connection status index representative value by using a connection status index of each edge device 102 (Step S802) .

For example, the distribution control apparatus 101 calculates the connection status index representative value by using a connection status index such as the number of times of reception of Keep Alive messages transmitted from the edge devices 102 within a predetermined time period or communication qualities. The connection status index representative value is the average, median, or x-percentile value (x-percentile) (e.g., x is 90) or the like of the connection status index.

The distribution control apparatus 101 assesses whether or not a status update response has been received from the edge device 102 within a predetermined time period (Step S803). The process in Step S803 is identical to the process in Step S701.

In a case where a status update response has been received from the edge device 102 within the predetermined time period (YES in Step S803), the distribution control apparatus 101 ends the termination assessment process. At this time, the distribution control apparatus 101 updates an entry in the edge device management information 222 corresponding to the edge device 102. Specifically, the distribution control apparatus 101 sets "success" in the distribution sequence execution result 502.

In a case where a status update response has not been received from the edge device 102 within the predetermined time period (NO in Step S803), the distribution control apparatus 101 assesses whether or not the connection status of the edge device 102 is good (Step S804). Specifically, such processes as the ones below are executed.

(S804-1) The distribution control apparatus 101 calculates a connection status index of the edge device 102.

For example, in a case where the edge device 102 is periodically transmitting Keep Alive messages to the distribution control apparatus 101, the distribution control apparatus 101 calculates, as a connection status index, the number of times of reception of the messages within a predetermined time period, or the like. For example, in a case where the edge device 102 is measuring an index representing the communication quality, the edge device 102 calculates the latest index, the average of the index, or the like as a connection status index.

(S804-2) The distribution control apparatus 101 assesses the connection status of the edge device 102 in reference to a result of comparison between the connection status index and the connection status index representative value.

For example, in a case where the number of times of reception of Keep Alive messages within the predetermined time period is equal to or greater than the connection status index representative value, the distribution control apparatus 101 assesses that the connection status of the edge device 102 is good. For example, in a case where the connection status index is equal to or greater than the connection status index representative value, the distribution control apparatus 101 assesses that the connection status of the edge device 102 is good.

In a case where the connection status of the edge device 102 is not good (NO in Step S804), the distribution control apparatus 101 registers, in the termination target list, data including the cause "device-specific" and identification information of the edge device 102 in association with each other (Step S805). Thereafter, the distribution control apparatus 101 ends the termination assessment process.

At this time, the distribution control apparatus 101 updates an entry in the edge device management information 222 corresponding to the edge device 102. Specifically, the distribution control apparatus 101 sets "failure" in the distribution sequence execution result 502 and sets "connection status" in the bad index 503.

In a case where the connection status of the edge device 102 is good (YES in Step S804), the distribution control apparatus 101 assesses whether or not the load of the edge device 102 is high (Step S806).

Specifically, the distribution control apparatus 101 calculates a load index of the edge device 102, and assesses whether or not the load of the edge device 102 is high, in reference to a result of comparison between the load index and the load index representative value.

For example, the distribution control apparatus 101 periodically acquires the usage rate of the processor 301 from the edge device 102, and calculates the latest usage rate, the average of the usage rate, or the like as the load index. In a case where the usage rate of the processor 301 is equal to or higher than the load index representative value, the distribution control apparatus 101 assesses that the load of the edge device 102 is high.

In a case where the load of the edge device 102 is not high (NO in Step S806), the distribution control apparatus 101 registers, in the termination target list, data including the cause "other" and identification information of the edge device 102 in association with each other (Step S807). Thereafter, the distribution control apparatus 101 ends the termination assessment process.

At this time, the distribution control apparatus 101 updates an entry in the edge device management information 222 corresponding to the edge device 102. Specifically, the distribution control apparatus 101 sets "failure" in the distribution sequence execution result 502 and sets "other" in the bad index 503.

In a case where the load of the edge device 102 is high (YES in Step S806), the distribution control apparatus 101 registers, in the termination target list, data including the cause "device-specific" and identification information of the edge device 102 in association with each other (Step S808). Thereafter, the distribution control apparatus 101 ends the termination assessment process.

At this time, the distribution control apparatus 101 updates an entry in the edge device management information 222 corresponding to the edge device 102. Specifically, the distribution control apparatus 101 sets "failure" in the distribution sequence execution result 502 and sets "load" in the bad index 503.

After the termination assessment process for all the edge devices 102 is ended, the distribution control apparatus 101 decides recommended operation to be presented to the worker, in reference to the termination target list. The method of deciding the recommended operation is identical to the method explained with reference to FIG. 7.

Assessing the connection status and the load of an edge device 102 in reference to a result of comparison between the evaluation indices of the edge device 102 and the evaluation index representative values makes it possible to evaluate the edge device 102 relatively. For example, an edge device 102 whose connection status is extremely bad or whose load is extremely high as compared with other edge devices 102 is recorded as experiencing such a state due to a device-specific cause.

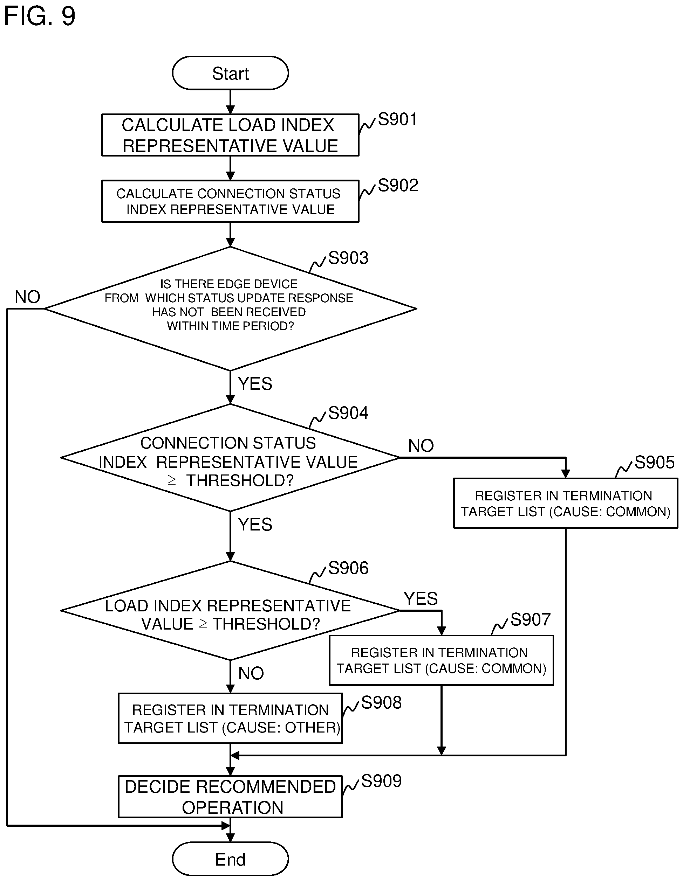

Next, the termination assessment process depicted in FIG. 9 is explained. The termination assessment process depicted in FIG. 9 is executed once for all the edge devices 102. In the termination assessment process depicted in FIG. 9, a cause of failure is identified in reference to results of comparison between representative values of evaluation indices acquired from the edge devices 102 and thresholds.

The distribution control apparatus 101 calculates a load index representative value (Step S901), and also calculates a connection status index representative value (Step S902). The processes in Step S901 and Step S902 are identical to the processes in Step S801 and Step S802.

The distribution control apparatus 101 assesses whether or not there is an edge device 102 from which a status update response has not been received within a predetermined time period (Step S903). That is, it is assessed whether or not there is an edge device 102 for which the distribution sequence has failed.

In a case where there are no edge devices 102 from which status update responses have not been received within the predetermined time period (NO in Step S903), the distribution control apparatus 101 ends the termination assessment process. At this time, the distribution control apparatus 101 updates entries in the edge device management information 222 corresponding to the respective edge devices 102. Specifically, the distribution control apparatus 101 sets "success" in the distribution sequence execution results 502.

In a case where there is an edge device 102 from which a status update response has not been received within the predetermined time period (YES in Step S903), the distribution control apparatus 101 assesses whether or not the connection status index representative value is equal to or greater than a threshold (Step S904).

In a case where the connection status index representative value is smaller than the threshold (NO in Step S904), the distribution control apparatus 101 registers, in the termination target list, data including the cause "common" and identification information of each edge device 102 for which the distribution sequence has failed in association with each other, the number of pieces of the data corresponding to the number of the edge devices 102 (Step S905). Thereafter, the distribution control apparatus 101 proceeds to Step S909.

At this time, the distribution control apparatus 101 updates entries in the edge device management information 222 corresponding to the respective edge devices 102 registered in the termination target list. Specifically, the distribution control apparatus 101 sets "failure" in the distribution sequence execution results 502 and sets "connection status" in the bad indices 503.

In a case where the connection status index representative value is equal to or greater than the threshold (YES in Step S904), the distribution control apparatus 101 assesses whether or not the load index representative value is equal to or greater than a threshold (Step S906).

In a case where the load index representative value is equal to or greater than the threshold (YES in Step S906), the distribution control apparatus 101 registers, in the termination target list, data including the cause "common" and identification information of each edge device 102 for which the distribution sequence has failed, in association with each other, the number of pieces of the data corresponding to the number of the edge devices 102 (Step S907). Thereafter, the distribution control apparatus 101 proceeds to Step S909.

At this time, the distribution control apparatus 101 updates entries in the edge device management information 222 corresponding to the respective edge devices 102 registered in the termination target list. Specifically, the distribution control apparatus 101 sets "failure" in the distribution sequence execution results 502 and sets "load" in the bad indices 503.

In a case where the load index representative value is smaller than the threshold (NO in Step S906), the distribution control apparatus 101 registers, in the termination target list, data including the cause "other" and identification information of each edge device 102 for which the distribution sequence has failed, in association with each other, the number of pieces of the data corresponding to the number of the edge devices 102 (Step S908). Thereafter, the distribution control apparatus 101 proceeds to Step S909.

At this time, the distribution control apparatus 101 updates entries in the edge device management information 222 corresponding to the respective edge devices 102 registered in the termination target list. Specifically, the distribution control apparatus 101 sets "failure" in the distribution sequence execution results 502 and sets "other" in the bad indices 503.

In Step S909, the distribution control apparatus 101 decides recommended operation to be presented to the worker, in reference to the termination target list (Step S909). Thereafter, the distribution control apparatus 101 ends the termination assessment process. For example, possible recommended operation is ones described below.

(1) In a case where there is an edge device 102 whose cause is "common," the distribution control apparatus 101 proposes the worker to terminate the distribution sequence for the group or the whole.
(2) In a case where there is an edge device 102 whose cause is "other," the distribution control apparatus 101 proposes the worker to terminate the distribution sequence for the edge device 102. In this case, the distribution sequence for other edge devices 102 is continued.
(3) In a case where there are various causes of failure in the distribution sequence for edge devices 102, the distribution control apparatus 101 decides recommended operation in reference to the ratio of edge devices 102 belonging to each cause. For example, in a case where the ratio of edge devices 102 belonging to the cause "other" is high, the distribution control apparatus 101 proposes the worker to terminate the distribution sequence for the group or the whole.

Assessing the connection statuses and the loads of edge devices 102 in reference to results of comparison between evaluation index representative values and thresholds makes it possible to evaluate the whole system. In addition, the termination assessment process depicted in FIG. 9 can reduce computation amounts as compared to processes such as those depicted in FIG. 7 and FIG. 8 that are performed for each edge device 102.

The termination assessment process has been explained thus far. The explanation returns to FIG. 6A.

The distribution control apparatus 101 transmits a result of the termination assessment process to the worker terminal 104 (Step S606). The result includes the edge device management information 222, the recommended operation, the termination target list, and the like.

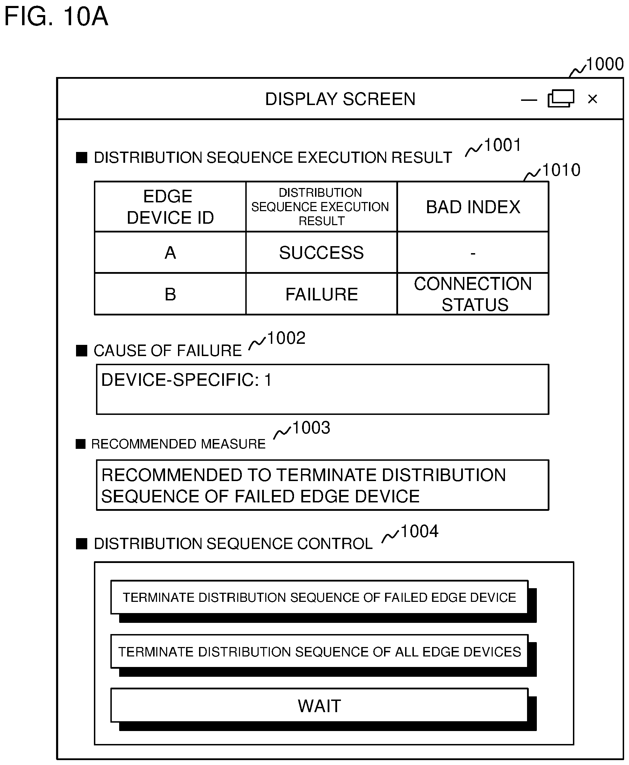

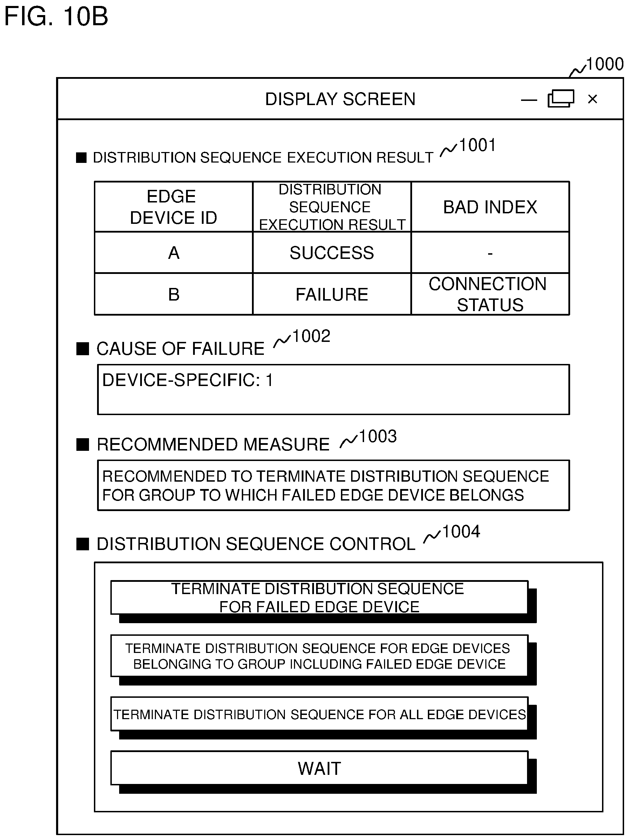

The worker terminal 104 presents a screen in reference to the result of the termination assessment process, and accepts termination operation performed by the worker. Here, the screen presented to the worker is explained. FIG. 10A and FIG. 10B are figures depicting examples of the screen displayed on the worker terminal 104 according to the first embodiment.

A screen 1000 includes display fields 1001, 1002, and 1003 and a selection field 1004.

The display field 1001 is a field that displays an execution result of the distribution sequence for each edge device 102. In the display field 1001, a table 1010 generated in reference to the edge device management information 222 is displayed.

The display field 1002 is a field that displays identified causes of failure. In the display field 1002, the types of the identified causes of failure and the numbers of edge devices 102 for which the causes of failure have been identified are displayed. The worker terminal 104 displays information on the display field 1002 in reference to the termination target list.

The display field 1003 is a field that displays the recommended operation decided by the distribution control apparatus 101.

The selection field 1004 is a field for selecting operation regarding the failed distribution sequence. In the selection field 1004, buttons for selecting operation are displayed. The worker gives an instruction to terminate the distribution sequence by referring to the display fields 1001, 1002, and 1003 and pressing any of buttons displayed in the selection field 1004.

In the selection field 1004 in FIG. 10A, buttons for realizing operation to terminate the distribution sequence for the failed edge device 102, operation to terminate the distribution sequence for all the edge devices 102, and waiting are displayed. The waiting is operation for executing the termination assessment process again after waiting for a predetermined length of time. In the selection field 1004 in FIG. 10B, a button for realizing operation to terminate the distribution sequence for edge devices 102 belonging to a group including the failed edge device 102 is further displayed.

The screen has been explained thus far. The explanation returns to FIG. 6A.

The worker performs the termination operation by using the worker terminal 104 (Step S607). Specifically, the worker presses any of the buttons displayed in the selection field 1004. The worker terminal 104 transmits a termination request according to the termination operation to the distribution control apparatus 101 (Step S608). The termination request includes information concerning the pressed button.

The distribution control apparatus 101 identifies a termination-target edge device 102 in accordance with the termination request, and transmits a termination instruction to the identified edge device 102 (Step S609).

In a case where termination of the distribution sequence for the failed edge device 102 is selected, the distribution control apparatus 10 transmits the termination instruction to only the failed edge device 102. In a case where termination of the distribution sequence for all the edge devices 102 is selected, the distribution control apparatus 101 transmits a termination instruction to all the edge devices 102. In a case where termination of the distribution sequence for edge devices 102 belonging to a group including the failed edge device 102 is selected, the distribution control apparatus 101 identifies the group including the failed edge device 102, by referring to the edge device management information 222, and transmits a termination instruction to the edge devices 102 belonging to the group. In a case where waiting is selected, the distribution control apparatus 101 does not transmit a termination instruction, and executes the termination assessment process again after a predetermined length of time has elapsed.

Terminating the distribution sequence for each group makes it possible to avoid a situation where the versions of firmware of edge devices 102 in a group are different from each other, in a case where the distribution sequence is firmware update, for example.

Note that, in a case where there are no edge devices 102 in the termination target list, that is, in a case where there are no edge devices 102 for which the distribution sequence has failed, the processes from Step S606 to Step S609 are not executed.

It is assumed here that termination of the distribution sequence for the edge device (B) 102 for which the distribution sequence has failed is requested. In this case, the distribution control apparatus 101 transmits a termination instruction to the edge device (B) 102.

The edge device 102 for which the distribution sequence is continued executes a command at a predetermined phase (Step S610), and transmits a command completion notification to the distribution control apparatus 101 (Step S611).

Specifically, the edge device 102 executes a command included in the file distributed from the distribution control apparatus 101 in Step S403. For example, the command to be executed is a command for realizing unzipping of software, acquisition of information content, or the like.

In a case where the distribution control apparatus 101 has received the command completion notification, the distribution control apparatus 101 transmits an authentication request to the worker terminal 104 (Step S612) .

The worker performs authentication operation by using the worker terminal 104 (Step S613), and the worker terminal 104 transmits an authentication response to the distribution control apparatus 101 (Step S614) .

After receiving the authentication response, the distribution control apparatus 101 transmits a status update request to the edge device 102 (Step S615) .

The edge device 102 transmits a status update response to the distribution control apparatus 101 (Step S616), and also executes a command (Step S617).

Specifically, the edge device 102 executes a command included in the file distributed from the distribution control apparatus 101 in Step S403. For example, the command to be executed is a command for realizing installation of software, distribution preparation of information content, or the like.

The edge device 102 transmits a metric to the distribution control apparatus 101 (Step S618) .

For example, the edge device 102 transmits, as the metric, an indication as to whether or not there is an execution result file generated along with the installation of the software, the version of the installed software, the acquisition rate of the information content, the version of the information content, or the like.

In a case where the distribution control apparatus 101 has received the metric, the distribution control apparatus 101 executes a metric checking process (Step S619) .

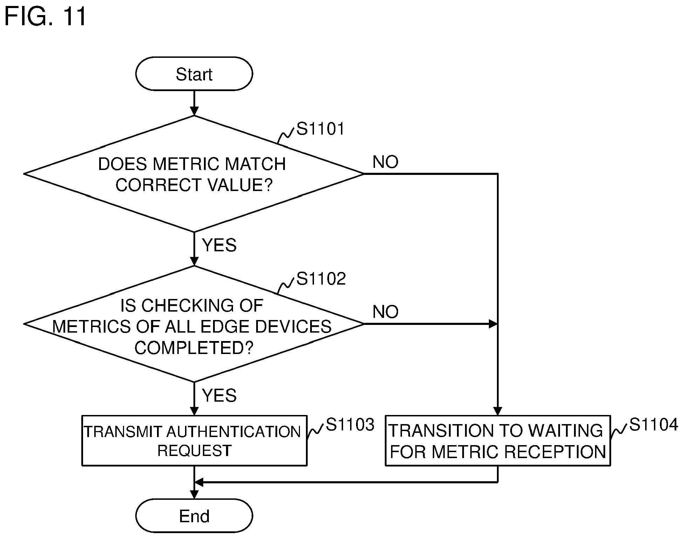

Here, the metric checking process is explained. FIG. 11 is a flowchart for explaining an example of the metric checking process executed by the distribution control apparatus 101 according to the first embodiment. The metric checking process is performed by the processor 201 that executes the metric checking program 212. In addition, the metric checking process is executed in a case where metrics were received from edge devices 102.

The distribution control apparatus 101 acquires the correct value from an entry corresponding to the type of the received metric, by referring to the metric correct value management information 221, and assesses whether or not the received metric matches the correct value (Step S1101) .

In a case where the received metric does not match the correct value (NO in Step S1101), the distribution control apparatus 101 transitions to waiting for metric reception (Step S1104), and ends the metric checking process.

In a case where the received metric matches the correct value (YES in Step S1101), the distribution control apparatus 101 assesses whether or not the checking has been completed for metrics of all the edge devices 102 (Step S1102). That is, it is assessed whether or not it is checked that the metrics of all the edge devices 102 match the correct values.

In a case where the checking has not been completed for the metrics of all the edge devices 102 (NO in Step S1102), the distribution control apparatus 101 transitions to waiting for metric reception (Step S1104), and ends the metric checking process.

In a case where the checking has been completed for the metrics of all the edge devices 102 (YES in Step S1102), the distribution control apparatus 101 transmits an authentication request to the worker terminal 104 (Steps S1103 and S620), and ends the metric checking process.

The metric checking process has been explained thus far. The explanation returns to FIG. 6B.

The worker performs authentication operation by using the worker terminal 104 (Step S621), and the worker terminal 104 transmits an authentication response to the distribution control apparatus 101 (Step S622) .

After receiving the authentication response, the distribution control apparatus 101 transmits a status update request to the edge device 102 (Step S623) .

The edge device 102 transmits a status update response to the distribution control apparatus 101 (Step S624) .

According to the first embodiment, the distribution control apparatus 101 identifies causes of failure of edge devices 102 from which status update responses after the file distribution are not received, and proposes termination operation of the distribution sequence according to the identified causes of failure. Since this allows efficient control of termination of the distribution sequence, workloads and working time of the worker required for control of the distribution sequence can be reduced.

### [Second Embodiment]

The execution phase of the termination assessment process in a second embodiment is different from that in the first embodiment. Hereinbelow, the second embodiment is explained with focus on differences from the first embodiment.

The configuration of the system according to the second embodiment is identical to that in the first embodiment. The hardware configuration and the software configuration of the distribution control apparatus 101 and the edge devices 102 according to the second embodiment are identical to those in the first embodiment. The data structures of the metric correct value management information 221 and the edge device management information 222 according to the second embodiment are identical to those in the first embodiment.

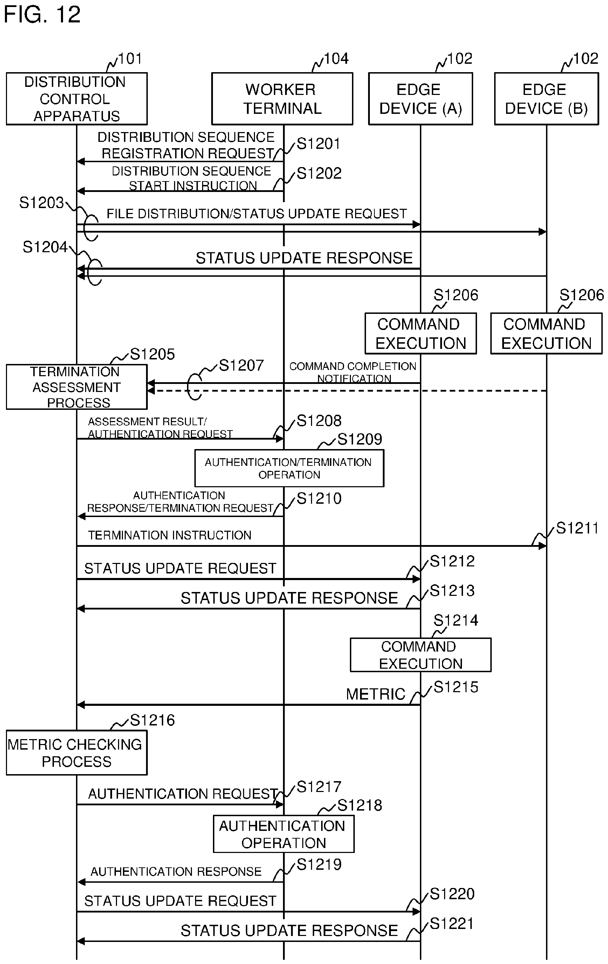

FIG. 12 is a sequence diagram for explaining a processing procedure in the system according to the second embodiment.

A worker transmits a distribution sequence registration request to the distribution control apparatus 101 by using the worker terminal 104 (Step S1201). The process in Step S1201 is identical to the process in Step S601.

The worker transmits a distribution sequence start instruction to the distribution control apparatus 101 by using the worker terminal 104 (Step S1202). Step S1202 is identical to the process in Step S602.

In a case where the distribution control apparatus 101 has received the distribution sequence start instruction, the distribution control apparatus 101 distributes a file and also transmits a status update request to the edge devices 102 (Step S1203). The process in Step S1203 is identical to the process in Step S603.

The edge devices 102 transmit status update responses to the distribution control apparatus 101 in response to the file distribution and the status update request (Step S1204) . The process in Step S1204 is identical to the process in Step S604.

After receiving the status update responses, the distribution control apparatus 101 starts a termination assessment process (Step S1205) .

The edge devices 102 execute a command at a predetermined phase (Step S1206), and transmit command completion notifications to the distribution control apparatus 101 (Step S1207). The processes in Step S1206 and Step S1207 are identical to the processes in Step S610 and Step S611.

It is assumed in the present embodiment that the distribution control apparatus 101 could receive a command completion notification from an edge device (A) 102, but could not receive a command completion notification from the edge device (B) 102. A possible cause of the failure to receive a command completion notification is the failure of command execution, an increased length of time of execution of the command, the loss of a command completion notification, or the like.

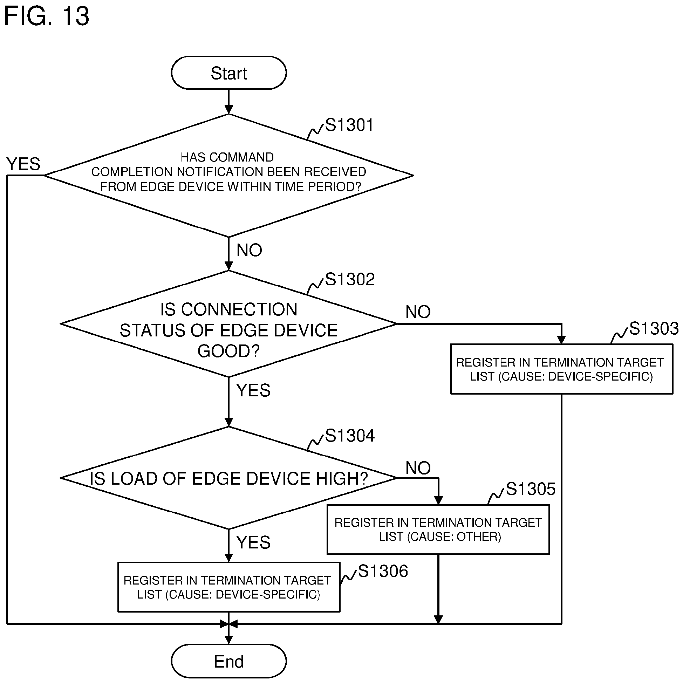

Here, details of the termination assessment process are explained. FIG. 13, FIG. 14, and FIG. 15 are flowcharts for explaining examples of the termination assessment process executed by the distribution control apparatus 101 according to the second embodiment. The termination assessment process is performed by the processor 201 that executes the termination assessment program 211.

First, the termination assessment process depicted in FIG. 13 is explained. The termination assessment process depicted in FIG. 13 is executed for each edge device 102. In the termination assessment process depicted in FIG. 13, it is assessed whether or not the distribution sequence has succeeded, according to whether or not there is a command completion notification from an edge device 102, and the cause of failure is identified in reference to evaluation indices acquired from edge devices 102.

The distribution control apparatus 101 assesses whether or not a command completion notification has been received from the edge device 102 within a predetermined time period (Step S1301).

In a case where a command completion notification has been received from the edge device 102 within the predetermined time period (YES in Step S1301), the distribution control apparatus 101 ends the termination assessment process. At this time, the distribution control apparatus 101 updates an entry in the edge device management information 222 corresponding to the edge device 102. Specifically, the distribution control apparatus 101 sets "success" in the distribution sequence execution result 502.

In a case where a command management notification has not been received from the edge device 102 within the predetermined time period (NO in Step S1301), the distribution control apparatus 101 assesses that the distribution sequence has failed, and identifies the cause of failure. First, the distribution control apparatus 101 assesses whether or not the connection status of the edge device 102 is good (Step S1302). The process in Step S1302 is identical to the process in Step S702.

In a case where the connection status of the edge device 102 is not good (NO in Step S1302), the distribution control apparatus 101 registers, in the termination target list, data including the cause "device-specific" and identification information of the edge device 102 in association with each other (Step S1303). Thereafter, the distribution control apparatus 101 ends the termination assessment process.

At this time, the distribution control apparatus 101 updates an entry in the edge device management information 222 corresponding to the edge device 102. Specifically, the distribution control apparatus 101 sets "failure" in the distribution sequence execution result 502, and sets "connection status" in the bad index 503.

In a case where the connection status of the edge device 102 is good (YES in Step S1302), the distribution control apparatus 101 assesses whether or not the load of the edge device 102 is high (Step S1304). The process in Step S1304 is identical to the process in Step S704.

In a case where the load of the edge device 102 is not high (NO in Step S1304), the distribution control apparatus 101 registers, in the termination target list, data including the cause "other" and identification information of the edge device 102 in association with each other (Step S1305). Thereafter, the distribution control apparatus 101 ends the termination assessment process.

At this time, the distribution control apparatus 101 updates an entry in the edge device management information 222 corresponding to the edge device 102. Specifically, the distribution control apparatus 101 sets "failure" in the distribution sequence execution result 502 and sets "other" in the bad index 503.

In a case where the load of the edge device 102 is high (YES in Step S1304), the distribution control apparatus 101 registers, in the termination target list, data including the cause "device-specific" and identification information of the edge device 102 in association with each other (Step S1306). Thereafter, the distribution control apparatus 101 ends the termination assessment process.

At this time, the distribution control apparatus 101 updates an entry in the edge device management information 222 corresponding to the edge device 102. Specifically, the distribution control apparatus 101 sets "failure" in the distribution sequence execution result 502 and sets "load" in the bad index 503.

In a case where the connection status of the edge device 102 for which the distribution sequence has failed is bad or in a case where the load of the edge device 102 is high, an indication that the distribution sequence has failed due to a cause unique to the edge device 102 is recorded in the termination target list. In addition, in a case where the connection status is good and the load is low, an indication that the distribution sequence has failed due to a cause other than causes unique to the edge device 102 is registered in the termination target list.

After the termination assessment process for all the edge devices 102 is ended, the distribution control apparatus 101 decides recommended operation to be presented to the worker, in reference to the termination target list. The method of deciding operation related to termination of the distribution sequence in the recommended operation is identical to that in the first embodiment. In the second embodiment, the content of authentication operation is also decided. For example, operation to authenticate only edge devices 102 for which the distribution sequence is continued, operation to authenticate all the edge devices 102 or edge devices 102 in a group, or the like is decided.

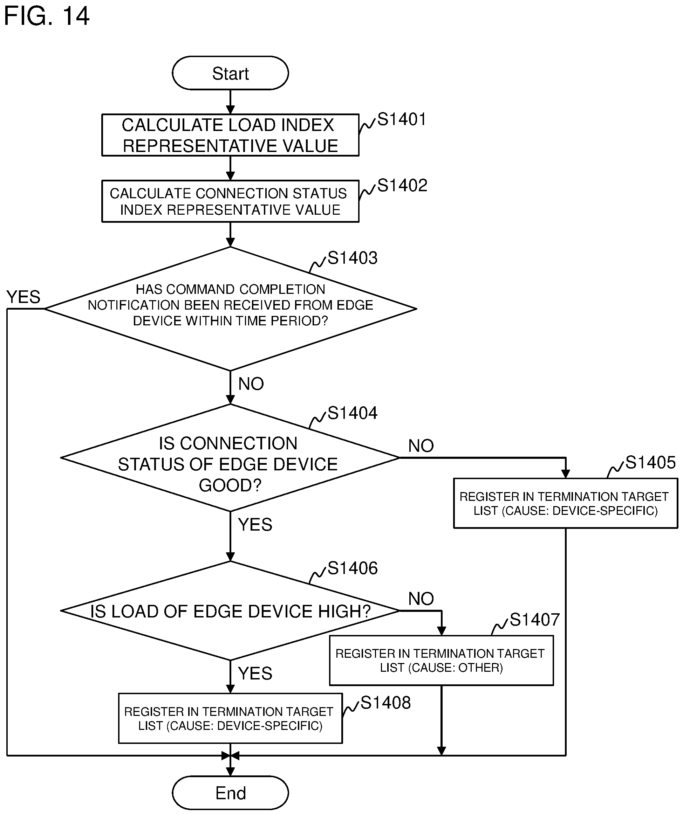

Next, the termination assessment process depicted in FIG. 14 is explained. The termination assessment process depicted in FIG. 14 is executed for each edge device 102. In the termination assessment process depicted in FIG. 14, it is assessed whether or not the distribution sequence has succeeded, according to whether or not there is a command completion notification from an edge device 102, and the cause of failure is identified in reference to an evaluation index acquired from a plurality of edge devices 102.

The distribution control apparatus 101 calculates a load index representative value (Step S1401). The process in Step S1401 is identical to the process in Step S801.

The distribution control apparatus 101 calculates a connection status index representative value (Step S1402). The process in Step S1402 is identical to the process in Step S802.

The distribution control apparatus 101 assesses whether or not a command completion notification has been received from the edge device 102 within a predetermined time period (Step S1403). The process in Step S1403 is identical to the process in Step S1301.

In a case where a command completion notification has been received from the edge device 102 within the predetermined time period (YES in Step S1403), the distribution control apparatus 101 ends the termination assessment process. At this time, the distribution control apparatus 101 updates an entry in the edge device management information 222 corresponding to the edge device 102. Specifically, the distribution control apparatus 101 sets "success" in the distribution sequence execution result 502.

In a case where a command completion notification has not been received from the edge device 102 within the predetermined time period (NO in Step S1403), the distribution control apparatus 101 assesses whether or not the connection status of the edge device 102 is good (Step S1404). The process in Step S1404 is identical to the process in Step S804.

In a case where the connection status of the edge device 102 is not good (NO in Step S1404), the distribution control apparatus 101 registers, in the termination target list, data including the cause "device-specific" and identification information of the edge device 102 in association with each other (Step S1405). Thereafter, the distribution control apparatus 101 ends the termination assessment process.

At this time, the distribution control apparatus 101 updates an entry in the edge device management information 222 corresponding to the edge device 102. Specifically, the distribution control apparatus 101 sets "failure" in the distribution sequence execution result 502 and sets "connection status" in the bad index 503.

In a case where the connection status of the edge device 102 is good (YES in Step S1404), the distribution control apparatus 101 assesses whether or not the load of the edge device 102 is high (Step S1406). The process in Step S1406 is identical to the process in Step S806.

In a case where the load of the edge device 102 is not high (NO in Step S1406), the distribution control apparatus 101 registers, in the termination target list, data including the cause "other" and identification information of the edge device 102 in association with each other (Step S1407). Thereafter, the distribution control apparatus 101 ends the termination assessment process.

At this time, the distribution control apparatus 101 updates an entry in the edge device management information 222 corresponding to the edge device 102. Specifically, the distribution control apparatus 101 sets "failure" in the distribution sequence execution result 502 and sets "other" in the bad index 503.

In a case where the load of the edge device 102 is high (YES in Step S1406), the distribution control apparatus 101 registers, in the termination target list, data including the cause "device-specific" and identification information of the edge device 102 in association with each other (Step S1408). Thereafter, the distribution control apparatus 101 ends the termination assessment process.

At this time, the distribution control apparatus 101 updates an entry in the edge device management information 222 corresponding to the edge device 102. Specifically, the distribution control apparatus 101 sets "failure" in the distribution sequence execution result 502 and sets "load" in the bad index 503.

After the termination assessment process for all the edge devices 102 is ended, the distribution control apparatus 101 decides recommended operation to be presented to the worker, in reference to the termination target list. The method of deciding the recommended operation is identical to the method explained with reference to FIG. 13.

Assessing the connection status and the load of an edge device 102 in reference to a result of comparison between the evaluation indices of the edge device 102 and the evaluation index representative values makes it possible to evaluate the edge device 102 relatively. For example, an edge device 102 whose connection status is extremely bad or whose load is extremely high as compared with other edge devices 102 is recorded as experiencing such a state due to a device-specific cause.

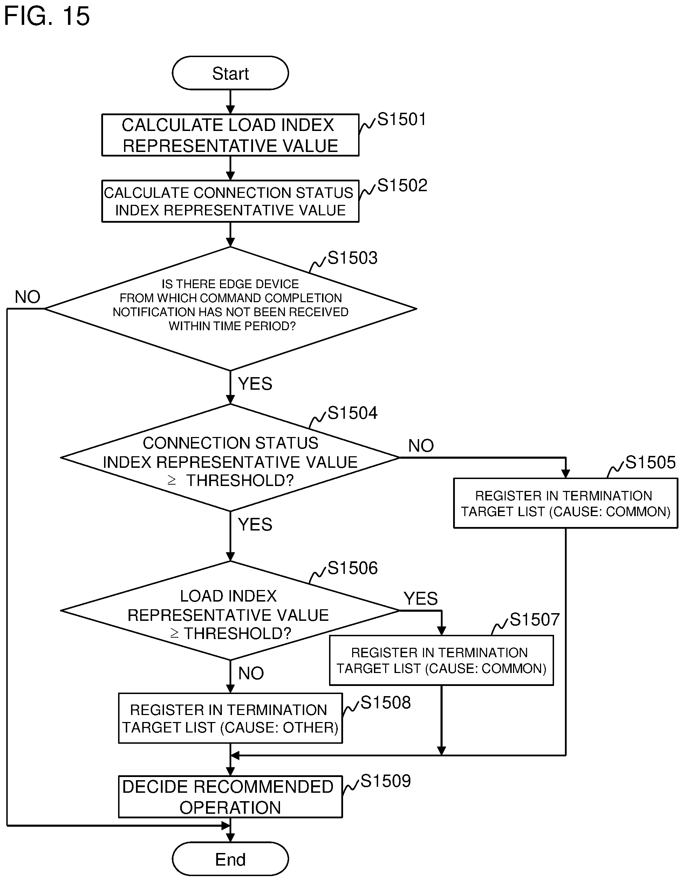

Next, the termination assessment process depicted in FIG. 15 is explained. The termination assessment process depicted in FIG. 15 is executed once for all the edge devices 102. In the termination assessment process depicted in FIG. 15, a cause of failure is identified in reference to results of comparison between representative values of evaluation indices acquired from the edge devices 102 and thresholds.

The distribution control apparatus 101 calculates a load index representative value (Step S1501), and also calculates a connection status index representative value (Step S1502). The processes in Step S1501 and Step S1502 are identical to the processes in Step S801 and Step S802.

The distribution control apparatus 101 assesses whether or not there is an edge device 102 from which a command completion notification has not been received within a predetermined time period (Step S1503).

In a case where there are no edge devices 102 from which command completion notifications have not been received within the predetermined time period (NO in Step S1503), the distribution control apparatus 101 ends the termination assessment process. At this time, the distribution control apparatus 101 updates entries in the edge device management information 222 corresponding to the respective edge devices 102. Specifically, the distribution control apparatus 101 sets "success" in the distribution sequence execution results 502.

In a case where there is an edge device 102 from which a command completion notification has not been received within the predetermined time period (YES in Step S1503), the distribution control apparatus 101 assesses whether or not the connection status index representative value is equal to or greater than a threshold (Step S1504).

In a case where the connection status index representative value is smaller than the threshold (NO in Step S1504), the distribution control apparatus 101 registers, in the termination target list, data including the cause "common" and identification information of each edge device 102 for which the distribution sequence has failed, in association with each other, the number of pieces of the data corresponding to the number of the edge devices 102 (Step S1505). Thereafter, the distribution control apparatus 101 proceeds to Step S1509.

At this time, the distribution control apparatus 101 updates entries in the edge device management information 222 corresponding to the respective edge devices 102 registered in the termination target list. Specifically, the distribution control apparatus 101 sets "failure" in the distribution sequence execution results 502 and sets "connection status" in the bad indices 503.

In a case where the connection status index representative value is equal to or greater than the threshold (YES in Step S1504), the distribution control apparatus 101 assesses whether or not the load index representative value is equal to or greater than a threshold (Step S1506) .

In a case where the load index representative value is equal to or greater than the threshold (YES in Step S1506), the distribution control apparatus 101 registers, in the termination target list, data including the cause "common" and identification information of each edge device 102 for which the distribution sequence has failed, in association with each other, the number of pieces of the data corresponding to the number of the edge devices 102 (Step S1507). Thereafter, the distribution control apparatus 101 proceeds to Step S1509.

At this time, the distribution control apparatus 101 updates entries in the edge device management information 222 corresponding to the respective edge devices 102 registered in the termination target list. Specifically, the distribution control apparatus 101 sets "failure" in the distribution sequence execution results 502 and sets "load" in the bad indices 503.

In a case where the load index representative value is smaller than the threshold (NO in Step S1506), the distribution control apparatus 101 registers, in the termination target list, data including the cause "other" and identification information of each edge device 102 for which the distribution sequence has failed, in association with each other, the number of pieces of the data corresponding to the number of the edge devices 102 (Step S1508). Thereafter, the distribution control apparatus 101 proceeds to Step S1509.

At this time, the distribution control apparatus 101 updates entries in the edge device management information 222 corresponding to the respective edge devices 102 registered in the termination target list. Specifically, the distribution control apparatus 101 sets "failure" in the distribution sequence execution results 502 and sets "other" in the bad indices 503.

In Step S1509, the distribution control apparatus 101 decides recommended operation to be presented to the worker, in reference to the termination target list (Step S1509). Thereafter, the distribution control apparatus 101 ends the termination assessment process.

The method of deciding operation related to termination of the distribution sequence in the recommended operation is identical to that in the first embodiment. In the second embodiment, authentication operation is also decided. For example, operation to authenticate only edge devices 102 for which the distribution sequence is continued, operation to authenticate all the edge devices 102 or edge devices 102 in a group, or the like is decided.

Assessing the connection statuses and the loads of edge devices 102 in reference to results of comparison between evaluation index representative values and thresholds makes it possible to evaluate the whole system. In addition, the termination assessment process depicted in FIG. 15 can reduce computation amounts as compared to processes such as those depicted in FIG. 13 and FIG. 14 that are performed for each edge device 102.

The termination assessment process has been explained thus far. The explanation returns to FIG. 12.

The distribution control apparatus 101 transmits a result of the termination assessment process and an authentication request to the worker terminal 104 (Step S1208). The result includes the edge device management information 222, the recommended operation, the termination target list, and the like.

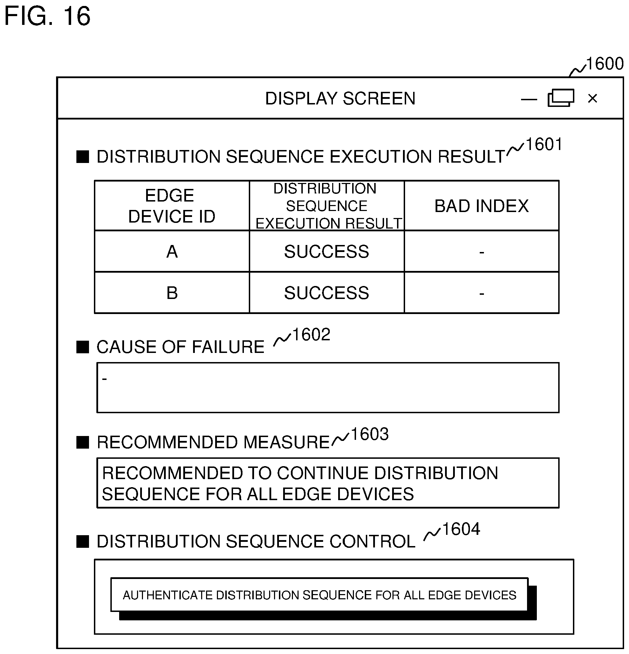

The worker terminal 104 presents a screen in reference to the result of the termination assessment process, and accepts authentication operation and termination operation performed by the worker. Here, the screen presented to the worker is explained. FIG. 16 is a figure depicting an example of the screen displayed on the worker terminal 104 according to the second embodiment.

A screen 1600 includes display fields 1601, 1602, and 1603 and a selection field 1604. The display fields 1601, 1602, and 1603 and the selection field 1604 are identical to the display fields 1001, 1002, and 1003 and the selection field 1004.

Note that, in the display field 1602 according to the second embodiment, not only operation regarding the failed distribution sequence, but also operation related to authentication of the distribution sequence is displayed. In addition, in the selection field 1604, a button for giving an instruction to perform operation combining the operation regarding the failed distribution sequence and the operation related to authentication of the distribution sequence is displayed. For example, in a case where the distribution sequence for some edge devices 102 has failed, "termination of distribution sequence for failed edge devices and authentication of distribution sequence for other edge devices" is displayed, and in a case where there are no failed edge devices 102, "authentication of distribution sequence for all edge devices" is displayed.

The screen has been explained thus far. The explanation returns to FIG. 12.

The worker performs the authentication operation and the termination operation by using the worker terminal 104 (Step S1209). Specifically, the worker presses any of the buttons displayed in the selection field 1604. The worker terminal 104 transmits an authentication response and a termination request to the distribution control apparatus 101 (Step S1210). It is assumed here that the worker has selected "termination of distribution sequence for failed edge devices and authentication of distribution sequence for other edge devices."

The distribution control apparatus 101 transmits a termination instruction to the termination-target edge device 102 (Step S1211). In addition, the distribution control apparatus 101 transmits a status update request to the continuation-target edge device 102 (Step S1212). In the sequence diagram depicted in FIG. 12, the termination instruction is transmitted to the edge device (B) 102, and the status update request is transmitted to the edge device (A) 102.

The edge device 102 transmits a status update response to the distribution control apparatus 101 (Step S1213), and also executes a command (Step S1214). The edge device 102 transmits a metric to the distribution control apparatus 101 (Step S1215). The processes in Step S1213, Step S1214, and Step S1215 are identical to the processes in Step S616, Step S617, and Step S618.

In a case where the distribution control apparatus 101 has received the metric, the distribution control apparatus 101 executes a metric checking process (Step S1216), and transmits an authentication request to the worker terminal 104 (Step S1217). The metric checking process according to the second embodiment is identical to that in the first embodiment.

The worker performs authentication operation by using the worker terminal 104 (Step S1218), and the worker terminal 104 transmits an authentication response to the distribution control apparatus 101 (Step S1219). The processes in Step S1218 and Step S1219 are identical to the processes in Step S621 and Step S622.

After receiving the authentication response, the distribution control apparatus 101 transmits a status update request to the edge device 102 (Step S1220). The process in Step S1220 is identical to the process in Step S623.

The edge device 102 transmits a status update response to the distribution control apparatus 101 (Step S1221). The process in Step S1221 is identical to the process in Step S624.

Note that, in a case where there are no failed edge devices 102, only the authentication request is transmitted in Step S1208, only the authentication operation is performed in Step S1209, and only the authentication response is performed in Step S11210. In addition, a termination instruction is not transmitted.

According to the second embodiment, the distribution control apparatus 101 identifies causes of failure of edge devices 102 from which command completion notifications are not received, and proposes termination operation and authentication operation of the distribution sequence depending on the identified causes of failure. Since this allows efficient control of termination of the distribution sequence, workloads and working time of the worker required for control of the distribution sequence can be reduced.

### [Third Embodiment]

The execution phase of the termination assessment process in a third embodiment is different from that in the first embodiment. Hereinbelow, the third embodiment is explained with focus on differences from the first embodiment.

The configuration of the system according to the third embodiment is identical to that in the first embodiment. The hardware configuration and the software configuration of the distribution control apparatus 101 and the edge devices 102 according to the third embodiment are identical to those in the first embodiment. The data structures of the metric correct value management information 221 and the edge device management information 222 according to the third embodiment are identical to those in the first embodiment.

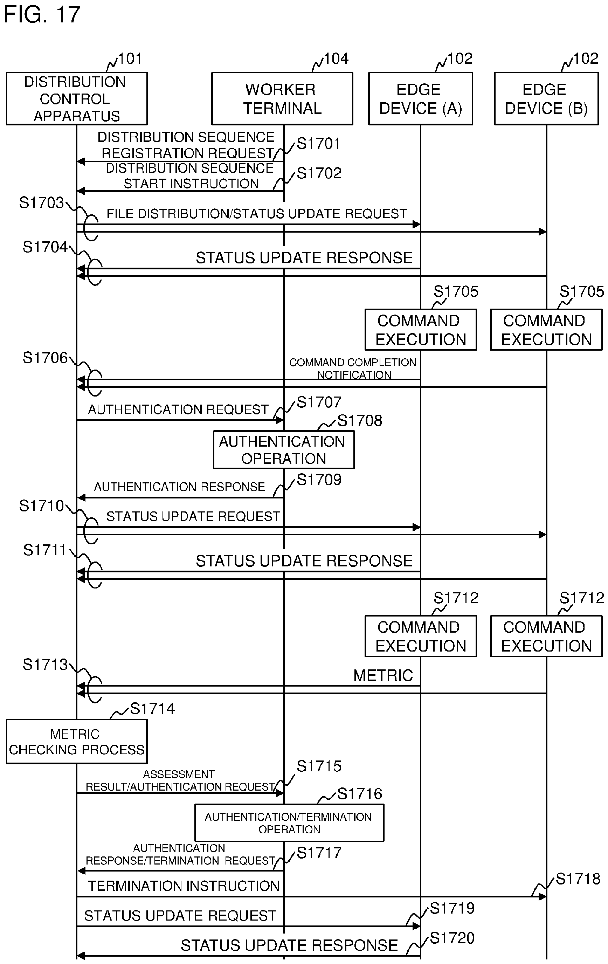

FIG. 17 is a sequence diagram for explaining a processing procedure in the system according to the third embodiment.

A worker transmits a distribution sequence registration request to the distribution control apparatus 101 by using the worker terminal 104 (Step S1701). The process in Step S1701 is identical to the process in Step S601.

The worker transmits a distribution sequence start instruction to the distribution control apparatus 101 by using the worker terminal 104 (Step S1702). Step S1702 is identical to the process in Step S602.

In a case where the distribution control apparatus 101 has received the distribution sequence start instruction, the distribution control apparatus 101 distributes a file and also transmits a status update request to the edge devices 102 (Step S1703). The process in Step S1703 is identical to the process in Step S603.

The edge devices 102 transmit status update responses to the distribution control apparatus 101 in response to the file distribution and the status update request (Step S1704). The process in Step S1704 is identical to the process in Step S604.

The edge devices 102 execute a command at a predetermined phase (Step S1705), and transmit command completion notifications to the distribution control apparatus 101 (Step S1706). The processes in Step S1706 and Step S1705 are identical to the processes in Step S610 and Step S611.

In a case where the distribution control apparatus 101 has received the command completion notifications, the distribution control apparatus 101 transmits an authentication request to the worker terminal 104 (Step S1707). The process in Step S1707 is identical to the process in Step S612.

The worker performs authentication operation by using the worker terminal 104 (Step S1708), and transmits an authentication response to the distribution control apparatus 101 (Step S1709). The processes in Step S1708 and Step S1709 are identical to the processes in Step S613 and Step S614.

After receiving the authentication response, the distribution control apparatus 101 transmits a status update request to the edge devices 102 (Step S1710). The process in Step S1710 is identical to the process in Step S615.

The edge devices 102 transmit status update responses to the distribution control apparatus 101 (Step S1711), and also execute a command (Step S1712). The edge devices 102 transmit metrics to the distribution control apparatus 101 (Step S1713). The processes in Step S1711, Step S1712, and Step S1713 are identical to the processes in Step S616, Step S617, and Step S618.

In a case where the distribution control apparatus 101 has received the metric, the distribution control apparatus 101 executes a metric checking process (Step S1714). In the third embodiment, causes of failure are identified in the metric checking process.

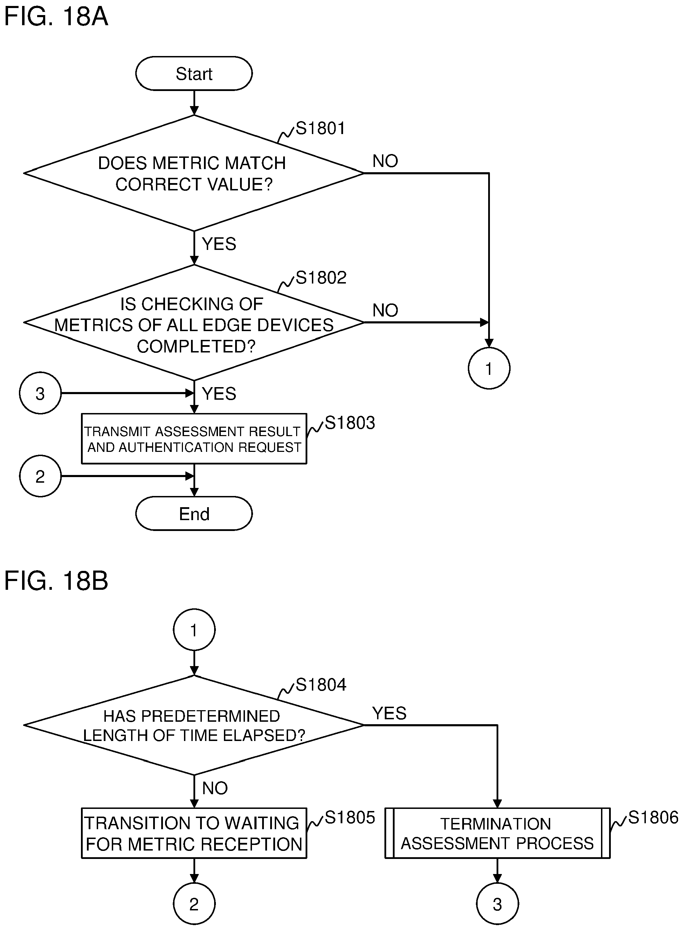

Here, the metric checking process is explained. FIG. 18A and FIG. 18B are flowcharts for explaining an example of the metric checking process executed by the distribution control apparatus 101 according to the third embodiment. The metric checking process is performed by the processor 201 that executes the metric checking program 212. In addition, the metric checking process is executed in a case where metrics are received from edge devices 102.

The distribution control apparatus 101 acquires the correct value from an entry corresponding to the type of the received metric, by referring to the metric correct value management information 221, and assesses whether or not the received metric matches the correct value (Step S1801) .

In a case where the received metric does not match the correct value (NO in Step S1801), the distribution control apparatus 101 proceeds to Step S1804.

In a case where the received metric matches the correct value (YES in Step S1801), the distribution control apparatus 101 assesses whether or not the checking has been completed for metrics of all the edge devices 102 (Step S1802) .

In a case where the checking has not been completed for the metrics of all the edge devices 102 (NO in Step S1802), the distribution control apparatus 101 proceeds to Step S1804.

In a case where the checking has been completed for the metrics of all the edge devices 102 (YES in Step S1802), the distribution control apparatus 101 transmits an assessment result and an authentication request to the worker terminal 104 (Steps S1803 and S1715), and ends the metric checking process.

In Step S1804, the distribution control apparatus 101 assesses whether or not a predetermined length of time has elapsed (Step S1804).

In a case where the predetermined length of time has not elapsed (NO in Step S1804), the distribution control apparatus 101 transitions to waiting for metric reception (Step S1805), and ends the metric checking process.

In a case where the predetermined length of time has elapsed (YES in Step S1804), the distribution control apparatus 101 executes a termination assessment process (Step S1806), and thereafter proceeds to Step S1803. That is, the distribution control apparatus 101 identifies causes of failure of edge devices 102 whose metrics have not matched the correct values within a predetermined time period, as edge devices 102 for which the distribution sequence has failed.

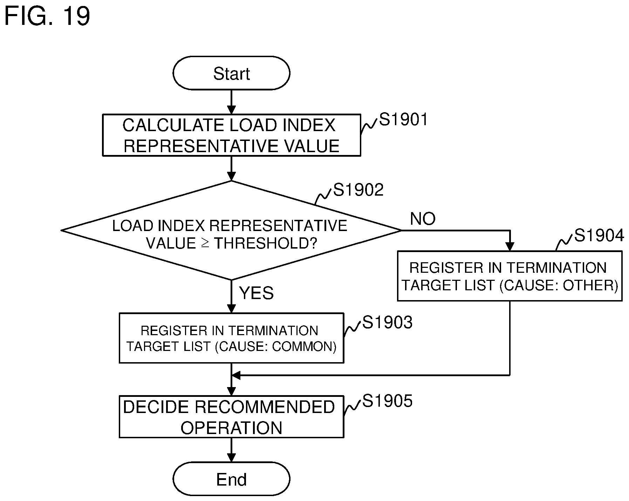

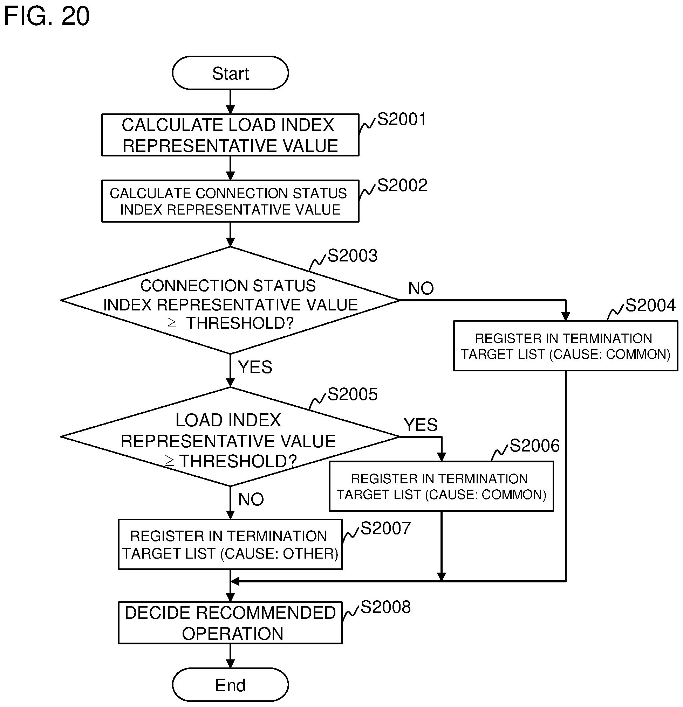

Here, the termination assessment process executed in the metric checking process is explained. The distribution control apparatus 101 executes the termination assessment process which varies depending on the types of the metrics. FIG. 19 and FIG. 20 are flowcharts for explaining examples of the termination assessment process executed by the distribution control apparatus 101 according to the third embodiment. The termination assessment process is performed by the processor 201 that executes the termination assessment program 211.

First, the termination assessment process depicted in FIG. 19 is explained. The termination assessment process depicted in FIG. 19 is executed once for each edge device 102 whose value of a metric at the start of the termination assessment process does not match the correct value. In the termination assessment process depicted in FIG. 19, the cause of failure is identified in reference to a load index acquired from an edge device 102.

The distribution control apparatus 101 calculates a load index representative value (Step S1901). The process in Step S1901 is identical to the process in Step S801.

The distribution control apparatus 101 assesses whether or not the load index representative value is equal to or greater than a threshold (Step S1902) .

In a case where the load index representative value is equal to or greater than the threshold (YES in Step S1902), the distribution control apparatus 101 registers, in the termination target list, data including the cause "common" and identification information of each edge device 102 whose metric does not match the correct value, in association with each other, the number of pieces of the data corresponding to the number of the edge devices 102 (Step S1903). Thereafter, the distribution control apparatus 101 proceeds to Step S1905.

At this time, the distribution control apparatus 101 updates entries in the edge device management information 222 corresponding to the respective edge devices 102 registered in the termination target list. Specifically, the distribution control apparatus 101 sets "failure" in the distribution sequence execution results 502, and sets "load" in the bad indices 503.

In a case where the load index representative value is equal to or smaller than the threshold (NO in Step S1902), the distribution control apparatus 101 registers, in the termination target list, data including the cause "other" and identification information of each edge device 102 whose metric does not match the correct value, in association with each other, the number of pieces of the data corresponding to the number of the edge devices 102 (Step S1904). Thereafter, the distribution control apparatus 101 proceeds to Step S1905.

At this time, the distribution control apparatus 101 updates entries in the edge device management information 222 corresponding to the respective edge devices 102 registered in the termination target list. Specifically, the distribution control apparatus 101 sets "failure" in the distribution sequence execution results 502 and sets "other" in the bad indices 503.

In Step S1905, the distribution control apparatus 101 decides recommended operation to be presented to the worker, in reference to the termination target list (Step S1905). Thereafter, the distribution control apparatus 101 ends the termination assessment process.

The method of deciding operation related to termination of the distribution sequence in the recommended operation is identical to that in the first embodiment. In the third embodiment, authentication operation is also decided. For example, operation to authenticate only edge devices 102 for which the distribution sequence is continued, operation to authenticate all the edge devices 102 or edge devices 102 in a group, or the like is decided.

Next, the termination assessment process depicted in FIG. 20 is explained. The termination assessment process depicted in FIG. 20 is executed once for each edge device 102 whose value of a metric at the start of the termination assessment process does not match the correct value. In the termination assessment process depicted in FIG. 20, a cause of failure is identified in reference to results of comparison between load index and connection status index representative values acquired from the edge devices 102 and thresholds.

The distribution control apparatus 101 calculates a load index representative value (Step S2001), and also calculates a connection status index representative value (Step S2002). The processes in Step S2001 and Step S2002 are processes identical to the processes in Step S801 and Step S802.

The distribution control apparatus 101 assesses whether or not the connection status index representative value is equal to or greater than a threshold (Step S2003).

In a case where the connection status index representative value is smaller than the threshold (NO in Step S2003), the distribution control apparatus 101 registers, in the termination target list, data including the cause "common" and identification information of each edge device 102 whose metric does not match the correct value, in association with each other, the number of pieces of the data corresponding to the number of the edge devices 102 (Step S2004). Thereafter, the distribution control apparatus 101 proceeds to Step S2008.

At this time, the distribution control apparatus 101 updates entries in the edge device management information 222 corresponding to the respect edge devices 102 registered in the termination target list. Specifically, the distribution control apparatus 101 sets "failure" in the distribution sequence execution results 502 and sets "connection status" in the bad indices 503.

In a case where the connection status index representative value is equal to or greater than the threshold (YES in Step S2003), the distribution control apparatus 101 assesses whether or not the load index representative value is equal to or greater than a threshold (Step S2005).

In a case where the load index representative value is equal to or greater than the threshold (YES in Step S2005), the distribution control apparatus 101 registers, in the termination target list, data including the cause "common" and identification information of each edge device 102 whose metric does not match the correct value, in association with each other, the number of pieces of the data corresponding to the number of the edge devices 102 (Step S2006). Thereafter, the distribution control apparatus 101 proceeds to Step S2008.

At this time, the distribution control apparatus 101 updates entries in the edge device management information 222 corresponding to the respective edge devices 102 registered in the termination target list. Specifically, the distribution control apparatus 101 sets "failure" in the distribution sequence execution results 502 and sets "load" in the bad indices 503.

In a case where the load index representative value is smaller than the threshold (NO in Step S2005), the distribution control apparatus 101 registers, in the termination target list, data including the cause "other" and identification information of each edge device 102 whose metric does not match the correct value, in association with each other, the number of pieces of the data corresponding to the number of the edge devices 102 (Step S2007). Thereafter, the distribution control apparatus 101 proceeds to Step S2008.

At this time, the distribution control apparatus 101 updates entries in the edge device management information 222 corresponding to the respective edge devices 102 registered in the termination target list. Specifically, the distribution control apparatus 101 sets "failure" in the distribution sequence execution results 502 and sets "other" in the bad indices 503.

In Step S2008, the distribution control apparatus 101 decides recommended operation to be presented to the worker, in reference to the termination target list (Step S2008). Thereafter, the distribution control apparatus 101 ends the termination assessment process.

The method of deciding operation related to termination of the distribution sequence in the recommended operation is identical to that in the first embodiment. In the third embodiment, authentication operation is also decided. For example, operation to authenticate only edge devices 102 for which the distribution sequence is continued, operation to authenticate all the edge devices 102 or edge devices 102 in a group, or the like is decided.

The distribution control apparatus 101 selects termination assessment processes to execute depending on the types of the metrics. For example, in a case of metrics which are indications as to whether or not there is an execution result file that accompanies installation of software or in a case of metrics which are the versions of information content, a possible cause of unmatching metrics is a problem with a command, a high load of an edge device 102, or the like, and accordingly, the termination assessment process depicted in FIG. 19 is executed. In a case of metrics which are the acquisition rates of information content, a possible cause of unmatching metrics is bad network connection, a high load of an edge device 102, or the like, and accordingly, the termination assessment process depicted in FIG. 20 is executed.

The metric checking process has been explained thus far. The explanation returns to FIG. 17.

The worker performs authentication operation and termination operation by using the worker terminal 104 (Step S1716), and transmits an authentication response and a termination request to the distribution control apparatus 101 (Step S1717). It is assumed here that the worker has selected "termination of distribution sequence for failed edge devices and authentication of distribution sequence for other edge devices."

The distribution control apparatus 101 transmits a termination instruction to the termination-target edge device 102 (Step S1718). In addition, the distribution control apparatus 101 transmits a status update request to the continuation-target edge device 102 (Step S1719). In the sequence diagram depicted in FIG. 17, the termination instruction is transmitted to the edge device (B) 102, and the status update request is transmitted to the edge device (A) 102.

The edge device 102 transmits a status update response to the distribution control apparatus 101 (Step S1720) .

Note that, in a case where the termination assessment process is not executed, only the authentication request is transmitted in Step S1715, only the authentication operation is performed in Step S1716, and only the authentication response is performed in Step S1716. In addition, a termination instruction is not transmitted.

According to the third embodiment, the distribution control apparatus 101 identifies causes of failure of edge devices 102 whose metrics do not match the correct values, and proposes termination operation and authentication operation of the distribution sequence depending on the identified causes of failure. Since this allows efficient control of termination of the distribution sequence, workloads and working time of the worker required for control of the distribution sequence can be reduced.

### [Fourth Embodiment]

In a fourth embodiment, a termination assessment process is executed before the start of the distribution sequence. Hereinbelow, the fourth embodiment is explained with focus on differences from the first embodiment.

The configuration of the system according to the fourth embodiment is identical to that in the first embodiment. The hardware configuration and the software configuration of the distribution control apparatus 101 and the edge devices 102 according to the fourth embodiment are identical to those in the first embodiment. The data structures of the metric correct value management information 221 and the edge device management information 222 according to the fourth embodiment are identical to those in the first embodiment.

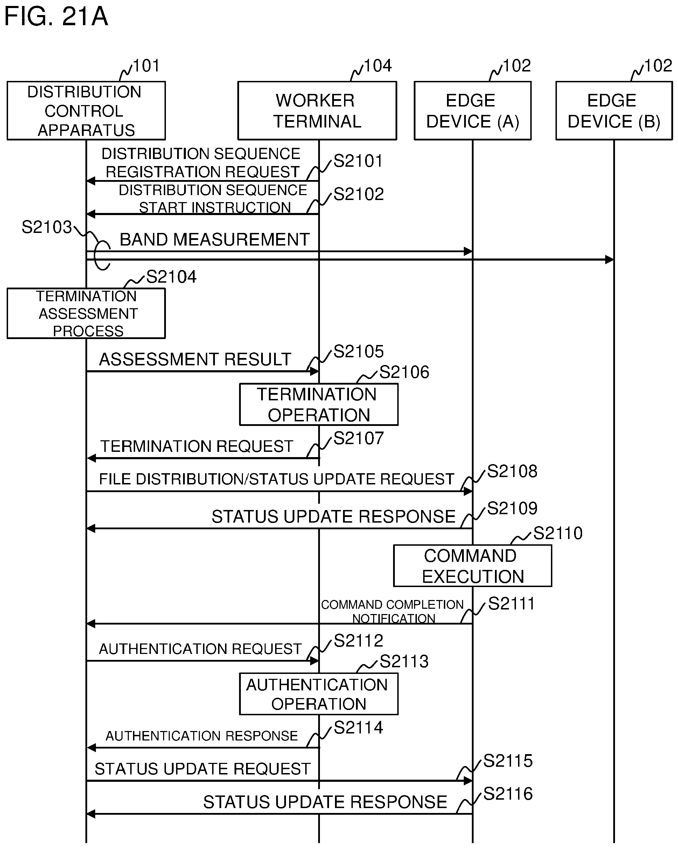

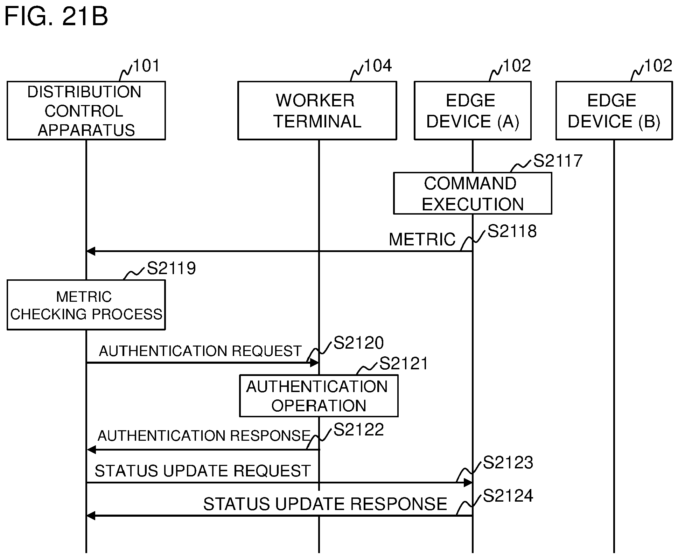

FIG. 21A and FIG. 21B are sequence diagrams for explaining a processing procedure in the system according to the fourth embodiment.

A worker transmits a distribution sequence registration request to the distribution control apparatus 101 by using the worker terminal 104 (Step S2101). The process in Step S2101 is identical to the process in Step S601.

The worker transmits a distribution sequence start instruction to the distribution control apparatus 101 by using the worker terminal 104 (Step S2102). The process in Step S2102 is identical to the process in Step S602.

In a case where the distribution control apparatus 101 has received the distribution sequence start instruction, the distribution control apparatus 101 measures the band of each edge device 102 (Step S2103) . For example, the distribution control apparatus 101 measures the band by using a ping transmission function or the like.

The distribution control apparatus 101 executes a termination assessment process in reference to band measurement results (Step S2104) .

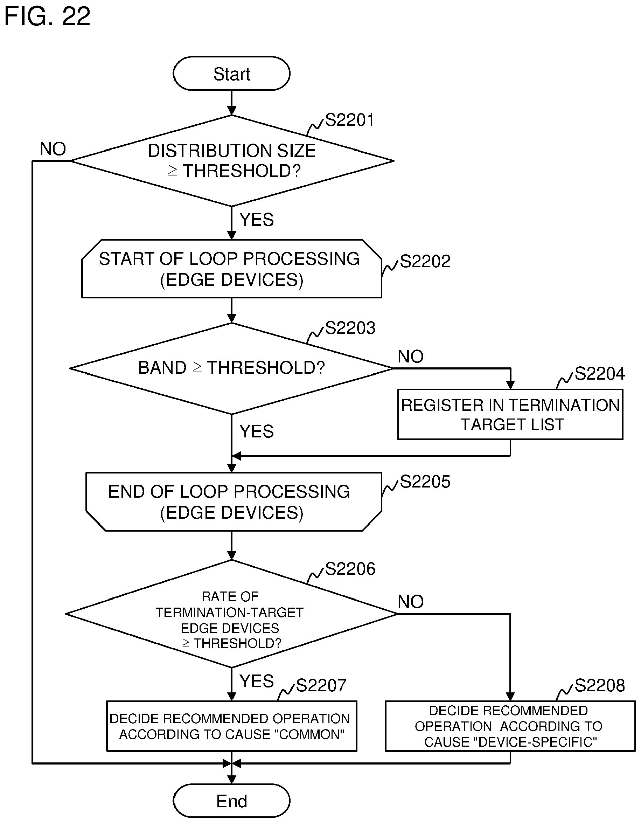

Here, details of the termination assessment process are explained. FIG. 22 is a flowchart for explaining an example of the termination assessment process executed by the distribution control apparatus 101 according to the fourth embodiment. The termination assessment process is performed by the processor 201 that executes the termination assessment program 211. The termination assessment process depicted in FIG. 22 is executed once for all the edge devices 102.

The distribution control apparatus 101 assesses whether or not the size of a file transmitted to the edge devices 102 is equal to or greater than a threshold (Step S2201) .

Here, the file to be transmitted to the edge devices 102 is a file transmitted from the distribution control apparatus 101 at the start of the distribution sequence. Note that, in a case of the distribution sequence in which software and information content are acquired from the distribution server 103, the size of the software and information content may also be taken into consideration.

In a case where the size of the file is smaller than the threshold (NO in Step S2201), the distribution control apparatus 101 ends the termination assessment process.

In a case where the size of the file is equal to or greater than the threshold (YES in Step S2201), the distribution control apparatus 101 starts the loop processing for the edge devices 102 (Step S2202). The distribution control apparatus 101 selects one edge device 102 from the edge devices 102 which are execution targets of the distribution sequence.

The distribution control apparatus 101 assesses whether or not the band of the selected edge device 102 is equal to or greater than a threshold (Step S2203).

In a case where the band of the selected edge device 102 is equal to or greater than the threshold (YES in Step S2203), the distribution control apparatus 101 proceeds to Step S2205.

In a case where the band of the selected edge device 102 is lower than the threshold (NO in Step S2203), the distribution control apparatus 101 registers the edge device 102 in the termination target list (Step S2204), and thereafter proceeds to Step S2205.

In Step S2205, the distribution control apparatus 101 assesses whether or not the process has been completed for all the edge devices 102 which are the execution targets of the distribution sequence (Step S2205).

In a case where the process has not been completed for all the edge devices 102 which are the execution targets of the distribution sequence (NO in Step S2205), the distribution control apparatus 101 returns to Step S2202, and a similar process is executed.

In a case where the process has been completed for all the edge devices 102 which are the execution targets of the distribution sequence (YES in Step S2205), the distribution control apparatus 101 assesses whether or not the ratio of termination-target edge devices 102 to the number of the edge devices 102 which are the execution targets of the distribution sequence is equal to or higher than a threshold (Step S2206).

In a case where the ratio is equal to or higher than the threshold (YES in Step S2206), the distribution control apparatus 101 decides recommended operation according to the cause "common" (Step S2207). Thereafter, the distribution control apparatus 101 ends the termination assessment process. For example, the distribution control apparatus 101 decides termination of execution of the distribution sequence for all the edge devices 102 which are the execution targets of the distribution sequence.

In a case where the ratio is lower than the threshold (NO in Step S2206), the distribution control apparatus 101 decides recommended operation according to the cause "device-specific" (Step S2208). Thereafter, the distribution control apparatus 101 ends the termination assessment process. For example, the distribution control apparatus 101 decides termination of execution of the distribution sequence for edge devices 102 registered in the termination target list.

The termination assessment process has been explained thus far. The explanation returns to FIG. 21A.

The distribution control apparatus 101 transmits a result of the termination assessment process to the worker terminal 104 (Step S2105). The result includes the recommended operation, the termination target list, and the like.

The worker performs the termination operation by using the worker terminal 104 (Step S2106). The process in Step S2106 is identical to the process in Step S607.

The worker terminal 104 transmits a termination request according to the operation performed by the worker to the distribution control apparatus 101 (Step S2107). The termination request includes information concerning the operated button.

The distribution control apparatus 101 identifies a termination-target edge device 102 in accordance with the termination request, and distributes the file and also transmits a status update request to edge devices 102 excluding the identified edge device 102 (Step S2108).

In a case where termination of execution of the distribution sequence for the particular edge device 102 is selected, the distribution control apparatus 10 distributes the file and also transmits a status update request to the edge devices 102 other than the particular edge device 102. At this time, the distribution control apparatus 101 updates an entry in the edge device management information 222 corresponding to the particular edge device 102. Specifically, the distribution control apparatus 101 sets "failure" in the distribution sequence execution result 502 and sets "connection status" in the bad index 503.

In a case where termination of execution of the distribution sequence for all the edge devices 102 is selected, the distribution control apparatus 101 does not transmit anything to all the edge devices 102. At this time, the distribution control apparatus 101 updates entries in the edge device management information 222 corresponding to all the edge devices 102. Specifically, the distribution control apparatus 101 sets "failure" in the distribution sequence execution results 502 and sets "connection status" in the bad indices 503.

Note that an instruction can be given for termination of execution of the distribution sequence for edge devices 102 belonging to a group including the particular edge device 102. In this case, the distribution control apparatus 101 identifies the group including the particular edge device 102, by referring to the edge device management information 222, and distributes the file and also makes a status update request to edge devices 102 excluding the edge devices 102 belonging to the group. At this time, the distribution control apparatus 101 updates entries in the edge device management information 222 corresponding to the respective edge devices 102 belonging to the group. Specifically, the distribution control apparatus 101 sets "failure" in the distribution sequence execution results 502 and sets "connection status" in the bad indices 503.

In a case where waiting is selected, the distribution control apparatus 101 distributes the file and also makes a status update request to all the edge devices 102.

Note that, in a case where there are no edge devices 102 in the termination target list, the processes from Step S2105 to Step S2107 are not executed.

It is assumed here that termination of execution of the distribution sequence for the edge device (B) 102 is requested. Accordingly, the distribution control apparatus 101 distributes the file and transmits a status update request only to the edge device (A) 102.

The edge device 102 transmits a status update response to the distribution control apparatus 101 in response to the file distribution and the status update request (Step S2109) .

The edge device 102 executes a command at a predetermined phase (Step S2110), and transmits a command completion notification to the distribution control apparatus 101 (Step S2111) .

In a case where the distribution control apparatus 101 has received the command completion notification, the distribution control apparatus 101 transmits an authentication request to the worker terminal 104 (Step S2112) .

The worker performs authentication operation by using the worker terminal 104 (Step S2113), and transmits an authentication response to the distribution control apparatus 101 (Step S2114).

After receiving the authentication response, the distribution control apparatus 101 transmits a status update request to the edge device 102 (Step S2115).

The edge device 102 transmits a status update response to the distribution control apparatus 101 (Step S2116), and also executes a command (Step S2117). The edge device 102 transmits a metric to the distribution control apparatus 101 (Step S2118).

In a case where the distribution control apparatus 101 has received the metric, the distribution control apparatus 101 executes a metric checking process (Step S2119), and transmits an authentication request to the worker terminal 104 (Step S2120).

The worker performs authentication operation by using the worker terminal 104 (Step S2121), and transmits an authentication response to the distribution control apparatus 101 (Step S2122).

After receiving the authentication response, the distribution control apparatus 101 transmits a status update request to the edge device 102 (Step S2123) .

The edge device 102 transmits a status update response to the distribution control apparatus 101 (Step S2124) .

Note that the processes from Step S2110 to Step S2124 are processes identical to the processes from Step S610 to Step S624.

According to the fourth embodiment, the distribution control apparatus 101 identifies, as an edge device 102 for which the distribution sequence may fail, an edge device 102 which does not have a band to spare, before the start of the distribution sequence. Since this allows efficient control of the distribution sequence, workloads and working time of the worker required for control of the distribution sequence can be reduced.

### (Modification Examples)

The first embodiment to the fourth embodiment can also be combined. Here, an embodiment obtained by combining the second embodiment and the fourth embodiment is described.

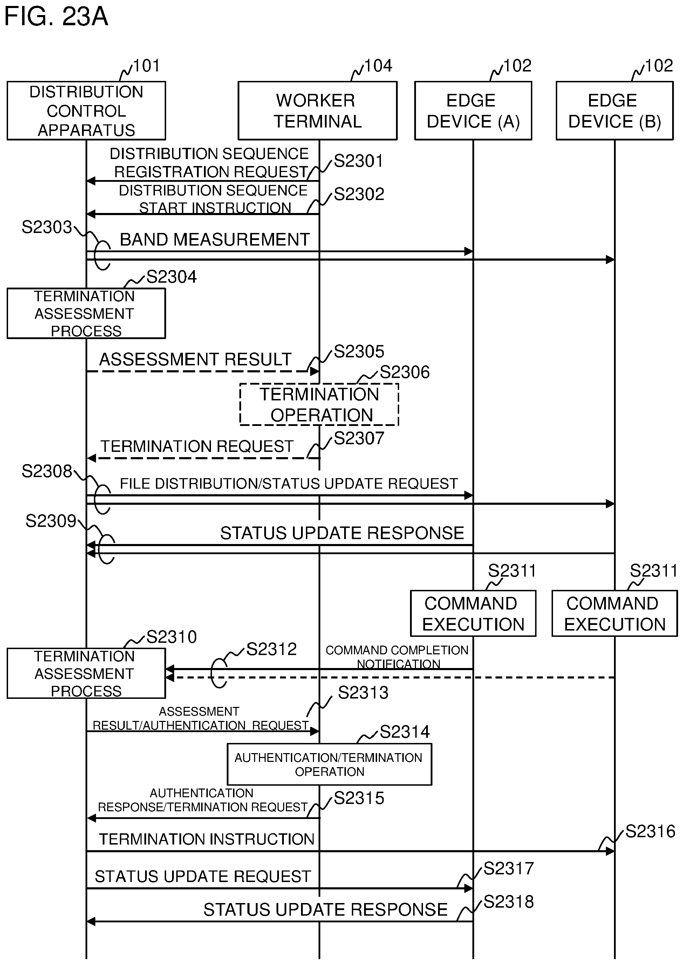

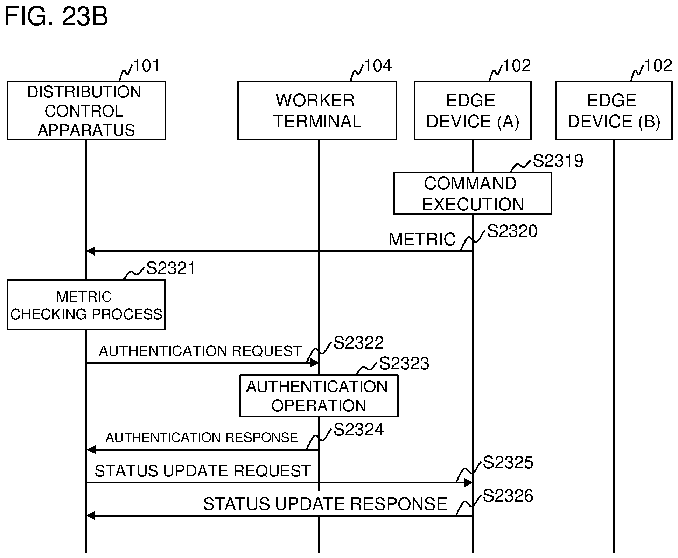

FIG. 23A and FIG. 23B are sequence diagrams for explaining a processing procedure in the system according to the modification example.

A worker transmits a distribution sequence registration request to the distribution control apparatus 101 by using the worker terminal 104 (Step S2301). Step S2301 is identical to the process in Step S601.

The worker transmits a distribution sequence start instruction to the distribution control apparatus 101 by using the worker terminal 104 (Step S2302). Step S2302 is identical to the process in Step S602.

In a case where the distribution control apparatus 101 has received the distribution sequence start instruction, the distribution control apparatus 101 measures the band of each edge device 102 (Step S2303). The process in Step S2303 is identical to the process in Step S2103.

The distribution control apparatus 101 executes a termination assessment process in reference to band measurement results (Step S2304). The process in Step S2304 is identical to the process in Step S2104.

The distribution control apparatus 101 transmits a result of the termination assessment process to the worker terminal 104 (Step S2305). The process in Step S2305 is identical to the process in Step S2105.

The worker performs the termination operation by using the worker terminal 104 (Step S2306). The process in Step S2306 is identical to the process in Step S607.

The worker terminal 104 transmits a termination request according to the operation performed by the worker to the distribution control apparatus 101 (Step S2307). The process in Step S2307 is identical to the process in Step S2107.

The distribution control apparatus 101 identifies a termination-target edge device 102 in accordance with the termination request, and distributes the file and also transmits a status update request to edge devices 102 excluding the identified edge device 102 (Step S2308). The process in Step S2308 is identical to the process in Step S2108.

Note that, in a case where there are no edge devices 102 in the termination target list, the processes from Step S2305 to Step S2307 are not executed. It is assumed here that there are no edge devices 102 in the termination target list. Accordingly, the file is distributed and a status update request is transmitted to each of the edge device (A) 102 and the edge device (B) 102.

The edge devices 102 transmit status update responses to the distribution control apparatus 101 in response to the file distribution and the status update request (Step S2309). The process in Step S2309 is identical to the process in Step S604.

After receiving the status update responses, the distribution control apparatus 101 starts a termination assessment process (Step S2310).

The edge devices 102 for which the distribution sequence is continued execute a command at a predetermined phase (Step S2311), and transmit command completion notifications to the distribution control apparatus 101 (Step S2312). The processes in Step S2311 and Step S2312 are identical to the processes in Step S610 and Step S611.

The distribution control apparatus 101 executes the termination assessment process according to the reception status of the command completion notification. Since the termination assessment process is identical to the process explained in the second embodiment, an explanation thereof is omitted.

The distribution control apparatus 101 transmits a result of the termination assessment process and an authentication request to the worker terminal 104 (Step S2313). The process in Step S2313 is identical to the process in Step S1208.

The worker performs authentication operation and termination operation by using the worker terminal 104 (Step S2314), and transmits an authentication response and a termination request to the distribution control apparatus 101 (Step S2315). The processes in Step S2314 and Step S2315 are identical to the processes in Step S1209 and Step S1210.

The distribution control apparatus 101 transmits a termination instruction to the termination-target edge device 102 (Step S2316). In addition, the distribution control apparatus 101 transmits a status update request to the continuation-target edge device 102 (Step S2317). The processes in Step S2316 and Step S2317 are identical to the processes in Step S1211 and Step S1212.

The edge device 102 transmits a status update response to the distribution control apparatus 101 (Step S2318), and also executes a command (Step S2319). The edge device 102 transmits a metric to the distribution control apparatus 101 (Step S2320). The processes in Step S2318, Step S2319, and Step S2320 are identical to the processes in Step S616, Step S617, and Step S618.

In a case where the distribution control apparatus 101 has received the metric, the distribution control apparatus 101 executes a metric checking process (Step S2321), and transmits an authentication request to the worker terminal 104 (Step S2322). The metric checking process is identical to that in the first embodiment.

The worker performs authentication operation by using the worker terminal 104 (Step S2323), and transmits an authentication response to the distribution control apparatus 101 (Step 52324). The processes in Step S2323 and Step S2324 are identical to the processes in Step S621 and Step S622.

After receiving the authentication response, the distribution control apparatus 101 transmits a status update request to the edge device 102 (Step S2325). The process in Step S2325 is identical to the process in Step S623.

The edge device 102 transmits a status update response to the distribution control apparatus 101 (Step S2326). The process in Step S2326 is identical to the process in Step S624.

In the examples depicted in FIG. 23A and FIG. 23B, since a command completion notification could not be received from the edge device (B) 102, the distribution control apparatus 101 has transmitted a termination instruction to the edge device (B) 102.

Note that the present invention is not limited to the embodiments described above, and includes various modification examples. In addition, for example, the embodiments described above explain constituent elements in detail in order to explain the present invention in an easy-to-understand manner, and the present invention is not necessarily limited to embodiments including all the constituent elements explained. In addition, some of constituent elements of each embodiment can be added to other constituent elements, deleted, or replaced with other constituent elements.

In addition, some or all of constituent elements, functions, processing sections, processing means, or the like described above may be realized with hardware by designing them on an integrated circuit and so on, for example. In addition, the present invention can also be realized by software program codes that realize functions of the embodiments. In this case, a storage medium on which the program codes are recorded is provided to a computer, and a processor included in the computer reads out the program codes stored on the storage medium. In this case, the program codes themselves read out from the storage medium realize the functions of the embodiments described before, and the program codes themselves and the storage medium on which the program codes are stored are included in the present invention. As the storage medium for supplying such program codes, for example, a flexible disc, a CD-ROM, a DVD-ROM, a hard disk, an SSD (Solid State Drive), an optical disc, a magneto-optical disc, a CD-R, a magnetic tape, a non-volatile memory card, a ROM, or the like is used.

In addition, the program codes to realize the functions described in the present embodiments can be implemented by a wide range of programming languages or script languages such as assemblers, C/C++, perl, Shell, PHP, Python, or Java, for example.

Further, software program codes that realize the functions of the embodiments may be stored on storage means such as a hard disk or a memory of a computer or a storage medium such as a CD-RW or a CD-R by distributing them via a network, and a processor included in the computer may read out and execute the program codes stored on the storage means or the storage medium.

In the embodiments mentioned above, depicted control lines and information lines are ones that are considered to be necessary for explanation, and all control lines and information lines that are necessary for products are not necessarily depicted. All constituent elements may be connected mutually.

## Claims

1. A control method of an information distribution process for a plurality of edge devices executed by a computer system connected with the edge devices, the computer system including a computer having a processor, a storage device connected to the processor, and a network interface connected to the processor, the control method of the information distribution process comprising:
a first step performed by the processor to monitor a state of each of the plurality of edge devices after the information distribution process for the plurality of edge devices is started;
a second step performed by the processor to execute a first process of identifying the edge device for which the information distribution process has failed and a cause of failure, in reference to a state monitoring result of each of the plurality of edge devices; and
a third step performed by the processor to present content of operation related to termination of the information distribution process, in reference to a result of the first process.

2. The control method of the information distribution process according to claim 1, wherein the cause of failure includes a first cause of failure which is a cause unique to the edge device and a second cause of failure which is a cause common to the plurality of edge devices.

3. The control method of the information distribution process according to claim 2, wherein the second step includes
a step performed by the processor to acquire, as an evaluation index and from the plurality of edge devices, at least any one of an index representing communication qualities of the edge devices and an index representing loads of the edge devices, and
a step performed by the processor to identify a cause of failure of the edge device for which the information distribution process has failed, by using the evaluation index.

4. The control method of the information distribution process according to claim 3, wherein
the first step includes a step performed by the processor to monitor whether or not there is a response from each of the plurality of edge devices, and
the second step includes a step performed by the processor to identify the edge device that has not responded, as the edge device for which the information distribution process has failed.

5. The control method of the information distribution according to claim 3, wherein
correct values of metrics representing states of progress of the information distribution from the plurality of edge devices are managed,
the first step includes a step performed by the processor to acquire the metrics from the plurality of edge devices, and
the second step includes a step performed by the processor to identify, as the edge device for which the information distribution process has failed, the edge device whose metric acquired has not matched the correct value within a time period.

6. The control method of the information distribution process according to claim 3, wherein the third step includes
a step performed by the processor to present, in a case where there is the edge device for which the information distribution process has failed due to the first cause of failure, a recommendation of termination of the information distribution process of the edge device, and
a step performed by the processor to present, in a case where there is the edge device for which the information distribution process has failed due to the second cause of failure, a recommendation of termination of the information distribution process of the plurality of edge devices.

7. The control method of the information distribution process according to claim 6, wherein
the information distribution process is executed for each group including the plurality of edge devices, and
the third step includes a step performed by the processor to present, in a case where there is the edge device for which the information distribution process has failed due to the first cause of failure, a recommendation of at least any one of termination of the information distribution process of the edge device and termination of the information distribution process of the plurality of edge devices belonging to the group including the edge device.

8. The control method of the information distribution process according to claim 2, comprising:
a step performed by the processor to measure bands of the plurality of edge devices before the information distribution is started;
a step performed by the processor to execute a second process of identifying the edge device for which the information distribution process may fail, in reference to a result of comparison between the bands and a threshold; and
a step performed by the processor to present content of operation related to termination of the information distribution process, in reference to a result of the second process.

9. A computer system that executes an information distribution process and is connected with a plurality of edge devices, the computer system comprising:
a computer having a processor, a storage device connected to the processor, and a network interface connected to the processor, wherein
the processor
monitors a state of each of the plurality of edge devices after the information distribution process for the plurality of edge devices is started,
executes a first process of identifying the edge device for which the information distribution process has failed and a cause of failure, in reference to a state monitoring result of each of the plurality of edge devices, and
presents content of operation related to termination of the information distribution process, in reference to a result of the first process, and
the cause of failure includes a first cause of failure which is a cause unique to the edge device and a second cause of failure which is a cause common to the plurality of edge devices.

10. The computer system according to claim 9,
wherein the processor
acquires, as an evaluation index and from the plurality of edge devices, at least any one of an index representing communication qualities of the edge devices and an index representing loads of the edge devices, and
identifies a cause of failure of the edge device for which the information distribution process has failed, by using the evaluation index.

11. The computer system according to claim 9,
wherein the processor
monitors whether or not there is a response from each of the plurality of edge devices, and
identifies the edge device that has not responded, as the edge device for which the information distribution process has failed.

12. The computer system according to claim 9,
wherein
correct values of metrics representing states of progress of the information distribution from the plurality of edge devices are managed, and
the processor
acquires the metrics from the plurality of edge devices, and
identifies, as the edge device for which the information distribution process has failed, the edge device whose metric acquired has not matched the correct value within a time period.

13. The computer system according to claim 9,
wherein the processor
presents, in a case where there is the edge device for which the information distribution process has failed due to the first cause of failure, a recommendation of termination of the information distribution process of the edge device, and
presents, in a case where there is the edge device for which the information distribution process has failed due to the second cause of failure, a recommendation of termination of the information distribution process of the plurality of edge devices.

14. The computer system according to claim 9,
wherein the processor
measures bands of the plurality of edge devices before the information distribution is started,
executes a second process of identifying the edge device for which the information distribution process may fail, in reference to a result of comparison between the bands and a threshold, and
presents content of operation related to termination of the information distribution process, in reference to a result of the second process.

15. A computer that executes an information distribution process and is connected with a plurality of edge devices, the computer comprising:
a processor;
a storage device connected to the processor; and
a network interface connected to the processor,
wherein
the processor
monitors a state of each of the plurality of edge devices after the information distribution process for the plurality of edge devices is started,
executes a process of identifying the edge device for which the information distribution process has failed and a cause of failure, in reference to a state monitoring result of each of the plurality of edge devices, and
presents content of operation related to termination of the information distribution process, in reference to a result of the process, and
the cause of failure includes a first cause of failure which is a cause unique to the edge device and a second cause of failure which is a cause common to the plurality of edge devices.
